(19) Europäisches Patentamt
European Patent Office
Office européen des brevets

(11) EP 3 030 587 B1

(12) FASCICULE DE BREVET EUROPEEN

(45) Date de publication et mention de la délivrance du brevet:
**24.02.2021 Bulletin 2021/08**

(21) Numéro de dépôt: **14739414.2**

(22) Date de dépôt: **11.07.2014**

(51) Int Cl.:
***C08C 19/25*** (2006.01) ***C08C 19/44*** (2006.01)
***C08L 15/00*** (2006.01)

(86) Numéro de dépôt international:
**PCT/EP2014/064977**

(87) Numéro de publication internationale:
**WO 2015/018599 (12.02.2015 Gazette 2015/06)**

# (54) PROCÉDÉ DE SYNTHÈSE EN CONTINU D'UN ÉLASTOMÈRE DIÉNIQUE MODIFIÉ, INSTALLATION POUR SA MISE EN UVRE

KONTINUIERLICHES SYNTHESEVERFAHREN FÜR EIN MODIFIZIERTES DIENELASTOMER UND ANLAGE ZUR IMPLEMENTIERUNG DAVON

CONTINUOUS SYNTHESIS METHOD FOR A MODIFIED DIENE ELASTOMER, FACILITY FOR IMPLEMENTING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.08.2013 FR 1357888**

(43) Date de publication de la demande:
**15.06.2016 Bulletin 2016/24**

(73) Titulaire: **Compagnie Générale des Etablissements Michelin**
**63000 Clermont-Ferrand (FR)**

(72) Inventeurs:
- **DIRE, Charlotte**
**F-63040 Clermont-Ferrand Cedex 9 (FR)**
- **MARECHAL, Jean-Marc**
**F-63040 Clermont-Ferrand Cedex 9 (FR)**
- **DORATO, Margarita**
**F-63040 Clermont-Ferrand Cedex 9 (FR)**
- **MANCEAU, Mathieu**
**F-63040 Clermont-Ferrand Cedex 9 (FR)**
- **PACHECO, Nuno**
**F-63040 Clermont-Ferrand Cedex 9 (FR)**

(74) Mandataire: **Le Cam, Véronique Marie Christine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A1- 0 992 537 WO-A1-2009/077837**

- **J Adler ET AL: "The effect of axial diffusion processes on the optimum yield of tubular reactors-II Variable temperatures, simple reversible reaction A+C", Chemical Engineering Science, 1 January 1964 (1964-01-01), pages 413-422, XP55333238, Retrieved from the Internet: URL:http://www.sciencedirect.com/science/article/pii/0009250964800130/pdf?md5=acc265989c1622925dbf7051c1d7a613&pid=1-s2.0-0009250964800130-main.pdf**
- **J P Vignes ET AL: "Diffusion et rbaction chimique dans un rhacteur tubulaire en regime laminaire", Chemical Engineering Science, 1 January 1962 (1962-01-01), pages 73-86, XP055333239, Retrieved from the Internet: URL:http://www.sciencedirect.com/science/article/pii/0009250962800190/pdf?md5=b2fb1af9eb376a11e6123131acb20295&pid=1-s2.0-0009250962800190-main.pdf**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention est relative à un procédé continu de synthèse d'un élastomère diénique modifié par un groupement alcoxysilane.

Depuis que les économies de carburant et la nécessité de protéger l'environnement sont devenues une priorité, il est souhaitable de produire des polymères possédant de bonnes propriétés mécaniques et une hystérèse aussi faible que possible afin de pouvoir les mettre en œuvre sous forme de compositions de caoutchouc utilisables pour la fabrication de divers produits semi-finis entrant dans la constitution des pneumatiques. Pour atteindre l'objectif de baisse d'hystérèse, de nombreuses solutions ont déjà été expérimentées. En particulier, on peut citer la modification de la structure des polymères et des copolymères diéniques en fin de polymérisation au moyen d'agents de fonctionnalisation dans le but d'obtenir une bonne interaction entre le polymère ainsi modifié et la charge, qu'il s'agisse du noir de carbone ou d'une charge inorganique renforçante. Il a notamment été proposé d'utiliser des polymères diéniques fonctionnalisés par des dérivés alcoxysilanes. A titre d'illustration de cet art antérieur relatif à des charges inorganiques renforçantes, on peut par exemple citer le brevet américain US-A-5 066 721 , WO2009/077837 et la demande de brevet EP A 0 299 074.

Il a également été proposé de combiner la fonctionnalisation par des fonctions amine à la fonctionnalisation par des fonctions alcoxysilanes. A titre d'illustration de cet art antérieur, on peut par exemple citer le brevet EP 0 992 537 qui décrit un élastomère étendu modifié en bout de chaîne par une fonction alcoxysilane et portant à l'autre extrémité ou le long de sa chaîne une ou plusieurs fonctions amine. Par ailleurs, il a également été proposé des élastomères fonctionnalisés en bout de chaîne par des fonctions alcoxysilanes portant un groupement amine. On peut citer, par exemple, la demande de brevet US 2005/0203251 qui décrit un élastomère fonctionnalisé en bout de chaîne par un alcoxysilane portant un groupement amine.

Les Demanderesses ont décrit dans le document WO 2009133068 A1 un élastomère diénique fonctionnalisé essentiellement constitué par l'espèce couplée d'un élastomère possédant au sein de la chaîne un groupement porteur d'une fonction alcoxysilane et d'une fonction amine, l'atome de silicium de ce groupement liant les deux parties de la chaîne de l'élastomère diénique. Cet élastomère fonctionnalisé confère à la composition le contenant des propriétés mécaniques et dynamiques améliorées, notamment une hystérèse améliorée, tout en conservant une mise en œuvre à cru satisfaisante, en vue notamment d'une utilisation en bande de roulement pour pneumatique.

Il est une préoccupation constante des concepteurs de matériaux destinés à la fabrication de pneumatiques, d'améliorer les compromis de propriétés mécaniques et dynamiques des compositions de caoutchouc en vue d'améliorer les performances du pneumatique les contenant. Ce souci d'amélioration du compromis de propriétés doit, dans la mesure du possible, s'inscrire dans une démarche visant à minimiser l'impact sur les aspects plus en amont que sont par exemple la synthèse des composants de compositions de caoutchouc et leurs caractéristiques propres.

Dans le brevet US 7,807,747 B2, il a été proposé d'améliorer notamment la processabilité d'un élastomère fonctionnalisé en utilisant un seul agent de fonctionnalisation, un composé alcoxysilane porteur d'une fonction amine en visant une répartition spécifique des espèces au sein de l'élastomère. La stratégie consiste à ajouter le composé alcoxysilane aminé, de préférence trialcoxysilane aminé, en deux temps lors de l'étape de fonctionnalisation : i) premier ajout en quantité telle que le rapport molaire n(trialcoxysilane aminé)/n(butyl lithium) soit compris entre 0,05 à 0,35, ii) puis second ajout en quantité telle que le rapport molaire final n(trialcoxysilane aminé)/n(butyl lithium) soit supérieur ou égal 0,5. Ce procédé permet l'obtention d'un mélange élastomère diénique fonctionnel comprenant 40 à 80 % en masse d'élastomère fonctionnalisé en extrémité de chaîne, 5 à 45 % en masse d'élastomère fonctionnalisé en milieu de chaîne et 3 à 30 % en masse d'élastomère étoilé. L'élastomère fonctionnalisé est synthétisé selon un procédé discontinu.

La modification des élastomères est un moyen important qui permet d'améliorer propriétés des compositions de caoutchouc les contenant en vue d'améliorer les performances du pneumatique les contenant. Or, on constate que par le passé, les procédés de modification d'un élastomère diénique nécessitant une maîtrise de la répartition des espèces au sein de l'élastomère modifié sont essentiellement opérés en discontinu. Seul le procédé discontinu permet d'affiner le taux de chaque espèce. Or un tel procédé n'est pas toujours productif et suffisamment compétitif et économique pour une production industrielle.

Le problème technique que se propose de résoudre l'invention est de pouvoir disposer d'un procédé de synthèse compétitif, économique et flexible, adaptable à une production industrielle, permettant de maîtriser la répartition des espèces au sein d'un élastomère diénique modifié.

La présente invention propose un procédé continu dont l'étape de fonctionnalisation est caractérisée par une distribution de temps de séjour particulière et un modèle cinétique spécifique, qui résout ce problème technique en ce sens qu'il permet de maîtriser les proportions des différentes espèces d'un élastomère modifié. En maîtrisant ainsi la répartition des espèces au sein de l'élastomère modifié, il est possible d'améliorer les propriétés de compositions de caoutchouc le contenant. Le procédé de l'invention étant un procédé continu, il est particulièrement adapté à une production industrielle économiquement intéressante avec une compétitivité accrue.

L'invention a donc pour objet un procédé de synthèse en continu d'un élastomère diénique modifié comprenant une étape dite de "polymérisation" lors de laquelle l'élastomère diénique vivant est synthétisé et une étape dite de

"fonctionnalisation" ou de "modification" lors de laquelle l'élastomère diénique vivant réagit sur un agent de fonctionnalisation spécifique comprenant un groupement trialcoxysilane et le cas échéant une autre fonction susceptible d'interagir avec une charge renforçante, cette dernière étape étant notamment caractérisée par un modèle cinétique déterminant et un écoulement particulier traduit par une distribution de temps de séjour spécifique.

L'invention a également pour objet l'élastomère diénique modifié par un agent de fonctionnal isation trialcoxysilane éventuellement porteur d'une fonction susceptible d'interagir avec une charge renforçante, synthétisé par un tel procédé.

L'invention a encore pour objet une installation destinée à la mise en œuvre de ce procédé de synthèse en continu et appropriée pour une application à l'échelle industrielle telle que décrite dans la revendication 14. Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Dans la présente description, on entend par élastomère diénique modifié selon l'invention un élastomère diénique qui comporte un groupement comprenant un atome de silicium, directement lié à la chaîne élastomère, et, le cas échéant, une fonction susceptible d'interagir avec une charge renforçante. C'est l'élastomère obtenu par la mise en œuvre du procédé de synthèse en continu objet de l'invention comprenant la modification de l'élastomère au moyen d'un agent de fonctionnai isation de type trialcoxysilane porteur, le cas échéant, d'une fonction susceptible d'interagir avec une charge renforçante.

Lorsque le groupement se situe en bout de chaîne, on dira alors que l'élastomère diénique est fonctionnalisé en bout de chaîne.

Lorsque le groupement se situe dans la chaîne élastomère principale linéaire, on dira alors que l'élastomère diénique est couplé ou encore fonctionnalisé en milieu de chaîne, par opposition à la position "en bout de chaîne" et bien que le groupement ne se situe pas précisément au milieu de la chaîne élastomère. L'atome de silicium de ce groupement lie les deux morceaux de la chaîne de l'élastomère diénique.

Lorsque le groupement est central auquel trois chaînes ou branches élastomères sont liées formant une structure en étoile de l'élastomère, on dira alors que l'élastomère diénique est étoilé. L'atome de silicium de ce groupement lie les trois branches de l'élastomère diénique modifié entre elles.

Dans la présente description, on entend par "groupement" ou "fonction susceptible d'interagir avec une charge renforçante", tout groupement ou fonction capable de former, au sein d'une composition de caoutchouc renforcée au moyen d'une charge, une liaison physique ou chimique avec ladite charge. Cette interaction peut s'établir par exemple par le biais de liaisons covalentes, hydrogène, ioniques et/ou électrostatiques entre ladite fonction et des fonctions présentes sur des charges.

Un premier objet de l'invention est un procédé de synthèse en continu d'un élastomère diénique modifié, caractérisé en ce qu'il comprend les étapes :
- de polymérisation anionique d'au moins un monomère diène conjugué en présence d'un initiateur de polymérisation,
- de modification de l'élastomère diénique dans un dispositif de fonctionnalisation, par mise en contact en une étape de l'élastomère diénique vivant porteur d'un site actif obtenu à l'étape précédente avec un agent de fonctionnalisation non polymérisable comprenant (a) le cas échéant, une fonction susceptible d'interagir avec une charge renforçante et (b) un groupement trialcoxysilane, le radical alcoxy, hydrolysable ou non, ayant 1 à 10 atomes de carbone,

➢ la modification comprenant trois réactions en série

| Réaction | Mécanisme |
|---|---|
| R1 | $PLi + A \xrightarrow{k_1} PA$ |
| R2 | $PLi + PA \xrightarrow{k_2} P_2A$ |
| R3 | $PLi + P_2A \xrightarrow{k_3} P_3A$ |

où

- A représente l'agent de fonctionnalisation,
- PLi représente une chaîne élastomère vivante,
- PA représente l'élastomère fonctionnalisé en bout de chaîne,
- $P_2A$ représente l'élastomère couplé,

- $P_3A$ représente l'élastomère étoilé à trois branches, et
- $k_i$ représente la constante cinétique de la réaction $R_i$,

s'effectuant selon la loi de vitesse suivante :

| Réactions | Vitesse de réaction |
|---|---|
| R1 | $V_1 = k_1[PLi][A]$ |
| R2 | $V_2 = k_2[PLi][PA]$ |
| R3 | $V_3 = k_3[PLi]\,[P_2A]$ |

où

- $k_1$, $k_2$ et $k_3$ sont les constantes cinétiques respectivement des réactions R1, R2 et R3 (exprimées en $(m^3/mol).s^{-1}$),
- [PLi] est la concentration de chaînes vivantes (exprimée en $mol/m^3$),
- [A] est la concentration en agent de modification A (exprimée en $mol/m^3$),
- [PA] est la concentration en élastomère fonctionnalisé en bout de chaîne (exprimée en $mol/m^3$),
- $[P_2A]$ est la concentration en élastomère couplé (exprimée en $mol/m^3$),
- $[P_3A]$ est la concentration en élastomère étoilé à trois branches (exprimée en $mol/m^3$),

le rapport K des constantes cinétiques défini comme: $K = \frac{k_1}{k_2} = \frac{k_2}{k_3}$ étant supérieur à 1, et

➢ la distribution de temps de séjour dans le dispositif de fonctionnalisation s'exprimant selon les équations 1 ou 3 suivantes :

(i) dans un dispositif de fonctionnalisation à au moins un réacteur continu tubulaire ou à au moins une cascade d'au moins deux réacteurs agités,

$$E_1(t) = \frac{1}{2}\left(\frac{P}{\pi\,\theta_1\,t}\right)^{\frac{1}{2}} e^{-\frac{P(\theta_1 - t)^2}{4\,\theta_1\,t}} \qquad \text{Eq 1}$$

dans laquelle :

- $P$ est le paramètre adimensionnel de résistance à la dispersion,
- $\theta_1$ est le temps de séjour défini comme le ratio volume de réacteur/débit volumique total, égal de préférence à au moins 0,1 minute et au plus à 10 minutes, plus préférentiellement au plus à 5 minutes,
- $t$ est la variable temps de la distribution de temps de séjour.

(ii) dans un dispositif de fonctionnalisation qui est une combinaison du dispositif (i) et d'un dispositif à au moins un réacteur continu agité, présentant une distribution de temps de séjour caractérisée par l'équation suivante :

$$E_2(t) = \frac{e^{\left(-\frac{t}{\theta_2}\right)}}{\theta_2} \qquad \text{Eq 2}$$

dans laquelle :

- $\theta_2$ est le temps de séjour défini comme le ratio volume de réacteur/débit volumique total, compris de préférence entre 0 et 60 minutes, plus préférentiellement entre 5 et 50 minutes,
- $t$ est la variable temps de la distribution de temps de séjour,

le dispositif (ii) présentant une distribution de temps de séjour caractérisée par l'équation 3 suivante, qui est le résultat de la convolution des équations 1 et 2 :

$$E_{12}(t) = \int_0^t E_1(t-T)\, E_2(T)\, dT \qquad \text{Eq 3}$$

$$E_{12}(t) = \int_0^t \frac{1}{2}\left(\frac{P}{\pi\,\theta_1\,(t-T)}\right)^{\frac{1}{2}} e^{-\frac{P(\theta_1-(t-T))^2}{4\,\theta_1\,(t-T)}} \frac{e^{\left(-\frac{T}{\theta_2}\right)}}{\theta_2}\, dT$$

dans laquelle :

- $\theta_1$ *et* $\theta_2$ sont les temps de séjours tels que définis plus haut,
- *P* est le paramètre adimensionnel de résistance à la dispersion,
- *t* est la variable temps de la distribution de temps de séjour,
- *T* est la variable d'intégration.

Dans ces équations, P est le paramètre adimensionnel de résistance à la dispersion comme defini dans la bibliographie « Villermeaux, J; Génie de la réaction chimique; 1993 ». Il est de préference supérieur à 6,9, plus préférentiellement supérieur ou égal à 9,6, voire supérieur ou égal à 12. P n'est pas limité par une valeur maximale dans le cadre l'invention. Il peut tendre vers l'infini. S'il tend vers l'infini, le dispositif dans lequel se déroule la fonctionnalisation se comporte alors comme un réacteur idéal avec un écoulement de type piston.

Le procédé objet de l'invention comprend une première étape de polymérisation anionique d'au moins un monomère diène conjugué en présence d'un initiateur de polymérisation.

La polymérisation anionique peut être effectuée de manière connue en soi en continu. On effectue généralement la polymérisation à des températures comprises entre 0°C et 110°C et de préférence de 60°C à 100°C, voire de 70°C à 90°C. La température peut être maintenue constante tout au long de cette étape ou peut être variable, selon les caractéristiques visées de l'élastomère synthétisé. Le procédé de polymérisation peut être mis en œuvre en solution, en milieu plus ou moins concentré ou dilué. Le solvant de polymérisation est de préférence un solvant hydrocarboné inerte qui peut être par exemple un hydrocarbure aliphatique ou alicyclique comme le pentane, l'hexane, l'heptane, l'isooctane, le cyclohexane, le méthylcyclohexane ou un hydrocarbure aromatique comme le benzène, le toluène, le xylène.

A titre de monomères diènes conjugués conviennent notamment le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

Selon certaines variantes du procédé de l'invention, le monomère diène conjugué peut être homopolymérisé.

Selon d'autres variantes du procédé de l'invention, le monomère diène conjugué peut être copolymérisé avec un ou plusieurs monomères diènes conjugués et/ou avec un ou plusieurs vinylaromatiques ayant de 8 à 20 atomes de carbone. A titre de composés vinylaromatiques conviennent notamment le styrène, l'ortho-, méta, para-méthylstyrène, le mélange commercial "vinyltoluène", le para-tertiobutylstyrène, les méthoxystyrènes, le vinylmésitylène, le divinylbenzène, le vinylnaphtalène, etc...

Ces variantes sont combinables avec les variantes et aspects préférentiels ou alternatifs décrits ci-après.

En tant qu'initiateur de polymérisation, on peut utiliser tout initiateur anionique monofonctionnel connu. Toutefois un initiateur contenant un métal alcalin tel que le lithium est utilisé à titre préférentiel. Comme initiateurs organolithiens conviennent notamment ceux comportant une liaison carbone-lithium et une liaison azote-lithium. Des composés représentatifs sont les organolithiens aliphatiques tels que l'éthyllithium, le n-butyllithium (n BuLi), l'isobutyllithium, les amidures de lithium obtenus à partir d'une amine secondaire cyclique, telle que la pyrrolidine et l'hexaméthylèneimine.

L'élastomère diénique peut avoir toute microstructure qui est fonction des conditions de polymérisation utilisées. L'élastomère peut être à blocs, statistiques, séquencés, microséquencés, etc.... La microstructure de cet élastomère peut être déterminée par la présence ou non d'un agent modifiant et/ou randomisant et les quantités d'agent modifiant et/ou randomisant employées.

La polymérisation anionique d'au moins un monomère diène conjugué en présence d'un initiateur de polymérisation génère des chaînes élastomères possédant un site réactif en extrémité de chaîne que l'on peut représenter par une formule schématique : PLi, P représentant la chaîne élastomère, et Li un atome de lithium. On parle alors communément d'élastomère vivant ou de chaîne vivante. Ces chaînes vivantes, ou élastomères vivants, réagissent ensuite sur l'agent de fonctionnalisation.

Un des éléments essentiels de l'invention réside dans le choix de cet agent de fonctionnalisation pour correspondre au modèle cinétique de la fonctionnalisation défini plus haut avec un rapport des constantes cinétiques, noté K, supérieur à 1. Ce rapport K est de préférence supérieur ou égal à 10, voire supérieur ou égal à 100. En dessous de cette valeur de 1, la répartition des différentes espèces conduit à un élastomère modifié dont l'utilisation en composition de caoutchouc renforcée se traduit par des propriétés de mise en œuvre et d'hystérèse qui ne sont pas toujours optimisées

pour une utilisation satisfaisante en bande de roulement pour pneumatique. Il n'y a pas de limite supérieure à K. L'homme du métier comprendra que plus K est grand, plus la réaction est gérée par le ratio molaire de l'agent de fonctionnalisation à initiateur de polymérisation. Lorsque cette valeur tend vers l'infini, le procédé est quantitatif et stœchiométrique.

L'agent de fonctionnalisation conforme à l'invention peut être porteur sur l'atome de silicium de groupements alcoxy hydrolysables ou encore de groupements alcoxy non hydrolysables, et éventuellement d'une fonction susceptible d'interagir avec une charge renforçante, les deux fonctions étant directement liées entre elles ou par l'intermédiaire d'un groupement espaceur. La fonction susceptible d'interagir avec une charge renforçante et le groupement espaceur sont tels que définis ci-après.

Selon des variantes de l'invention, l'agent de fonctionnalisation peut être représenté par la formule 1 suivante:

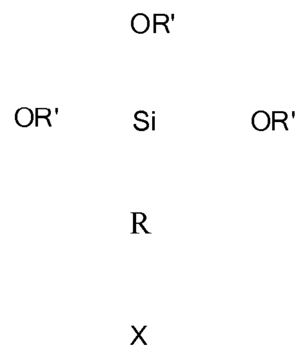

**Formule 1**

dans laquelle,

- R, groupement espaceur, est un radical hydrocarboné divalent aliphatique, saturé ou non, cyclique ou non, en $C_1$-$C_{18}$, aromatique en $C_6$-$C_{18}$, de préférence un radical hydrocarboné divalent, linéaire ou ramifié, aliphatique en $C_1$-$C_{10}$, plus préférentiellement un radical hydrocarboné divalent linéaire aliphatique en $C_1$-$C_6$, plus préférentiellement encore le radical hydrocarboné linéaire en $C_3$.

- X est un atome d'hydrogène ou une fonction susceptible d'interagir avec une charge renforçante,

- les radicaux R', substitués ou non substitués, identiques ou différents, représentent un groupe alkyle en $C_1$-$C_{10}$, voire en $C_1$-$C_8$, de préférence un groupe alkyle en $C_1$-$C_4$, plus préférentiellement méthyle et éthyle.

Les différents aspects, préférentiels ou non, qui précèdent sont combinables entre eux.

Selon des variantes de l'invention, l'agent de fonctionnalisation ne comporte pas d'autre fonction que celle comprenant l'atome de silicium de type trialcoxysilane.

Selon d'autres variantes de l'invention, l'agent de fonctionnalisation comporte une fonction susceptible d'interagir avec une charge renforçante Cette dénomination n'exclut toutefois pas la possibilité pour la fonction comprenant l'atome de silicium d'interagir également avec une charge renforçante.

Par fonction susceptible d'interagir avec une charge renforçante, on entend de préférence des fonctions comprenant au moins un hétéroatome choisi parmi N, S, O, P. On peut, à titre d'exemple, citer parmi ces fonctions les amines primaires, secondaires ou tertiaires, cycliques ou non, les isocyanates, les imines, les cyano, les thiols, les carboxylates, les époxydes, les phosphines primaires, secondaires ou tertiaires.

Ainsi, selon des variantes de l'invention, la fonction susceptible d'interagir avec une charge renforçante est une amine primaire, protégée ou non, secondaire, protégée ou non, ou tertiaire. L'atome d'azote peut alors être substitué par deux groupements, identiques ou différents, pouvant être un radical trialkyl silyl, le groupement alkyle ayant 1 à 4 atomes de carbone, ou un radical alkyle en $C_1$-$C_{10}$, de préférence alkyle en $C_1$-$C_4$, plus préférentiellement un radical méthyle ou éthyle, ou alors les deux substituants de l'azote forment avec celui-ci un hétérocycle contenant un atome d'azote et au moins un atome de carbone, de préférence de 2 à 6 atomes de carbone,

On peut citer par exemple à titre d'agent de fonctionnalisation dont la fonction susceptible d'interagir avec une charge renforçante est une amine, les (N,N-dialkylaminopropyl)trialcoxysilanes, les (N-alkylaminopropyl)trialcoxysilanes dont la fonction amine secondaire est protégée par un groupement trialkyl silyl et les aminopropyltrialcoxysilanes dont la fonction amine primaire est protégée par deux groupements trialkyl silyl. Les substituants alkyle présents sur l'atome

d'azote sont linéaires ou ramifiés et possèdent avantageusement de 1 à 10 atomes de carbone, de préférence 1 à 4, plus préférentiellement 1 ou 2. Par exemple, conviennent à titre de substituants alkyles les groupements métylamino-, diméthylamino-, éthylamino-, diéthylamino, propylamino-, dipropylamino-, butylamino-, dibutylamino-, pentylamino-, dipentylamino, hexylamino, dihexylamino, hexaméthylèneamino, de préférence les groupements diéthylamino et diméthylamino. Les substituants alcoxy sont linéaires ou ramifiés et possèdent généralement de 1 à 10 atomes de carbone, voire 1 à 8, de préférence de 1 à 4, plus préférentiellement 1 ou 2.

Préférentiellement, l'agent de fonctionnalisation peut être choisi parmi le 3-(N,N-diméthylaminopropyl)triméthoxysilane, le 3-(N,N-diméthylaminopropyl)triéthoxysilane , le 3-(N,N-diéthylaminopropyl)triméthoxysilane, le 3-(N,N-diéthylaminopropyl)triéthoxysilane, le 3-(N,N-dipropylaminopropyl)triméthoxysilane, le 3-(N,N-dipropylaminopropyl)triéthoxysilane, le 3-(N,N-dibutylaminopropyl)triméthoxysilane, le 3-(N,N-dibutylaminopropyl)triéthoxysilane, le 3-(N,N-dipentylaminopropyl)triméthoxysilane, le 3-(N,N-dipentylaminopropyl)triéthoxysilane, le 3-(N,N-dihexylaminopropyl)triméthoxysilane, le 3-(N,N-dihexylaminopropyl)triéthoxysilane, le 3-(hexamethylèneaminopropyl)triméthoxysilane, le 3-(hexamethylèneaminopropyl)triéthoxysilane, le 3-(morpholinopropyl)triméthoxysilane, le 3-(morpholinopropyl)triéthoxysilane, le 3-(piperidinopropyl)triméthoxysilane et le 3-(piperidinopropyl)triéthoxysilane. Plus préférentiellement, l'agent de fonctionnalisation est le 3-(N,N-diméthylaminopropyl)triméthoxysilane.

Préférentiellement, l'agent de fonctionnalisation peut être choisi parmi le 3-(N,N-méthyltriméthylsilylaminopropyl)triméthoxysilane, le 3-(N,N-méthyltriméthylsilylaminopropyl)triéthoxysilane, le 3-(N,N-éthyltriméthylsilylaminopropyl)triméthoxysilane, le 3-(N,N-éthyltriméthylsilylaminopropyl)triéthoxysilane, le 3-(N,N-propyltriméthylsilylaminopropyl)triméthoxysilane et le 3-(N,N-propyltriméthylsilylaminopropyl)triéthoxysilane. Plus préférentiellement, l'agent de fonctionnalisation est le 3-(N,N-méthyltriméthylsilylaminopropyl)triméthoxysilane.

Préférentiellement, l'agent de fonctionnalisation peut être choisi parmi le 3-(N,N-bistriméthylsilylaminopropyl)triméthoxysilane et le 3-(N,N-bistriméthylsilylaminopropyl)triéthoxysilane.. Plus préférentiellement, l'agent de fonctionnalisation est le 3-(N,N-bistriméthylsilylaminopropyl)triméthoxysilane.

Selon des variantes de l'invention, la fonction susceptible d'interagir avec une charge renforçante est une fonction isocyanate. Préférentiellement, l'agent de fonctionnalisation peut être choisi parmi le 3-(isocyanatopropyl)triméthoxysilane et le 3-(isocyanatopropyl)triéthoxysilane.

Selon des variantes de l'invention, la fonction susceptible d'interagir avec une charge renforçante est une fonction imine. Préférentiellement, l'agent de fonctionnalisation peut être choisi parmi le N-(1,3-diméthylbutylidène)-3-(triméthoxysilyl)-1-propanamine, le N-(1,3-diméthylbutylidène)-3-(triéthoxysilyl)-1-propanamine, le N-(1,3-méthyléthylidène)-3-(triméthoxysilyl)-1-propanamine, le N-(1,3-méthyléthylidène)-3-(triéthoxysilyl)-1-propanamine, le N-ethylidène-3-(triméthoxysilyl)-1-propanamine, le N-ethylidène-3-(triéthoxysilyl)-1-propanamine, le N-(1-méthylpropylidène)-3-(triméthoxysilyl)-1-propanamine, le N-(1-méthylpropylidène)-3-(triéthoxysilyl)-1-propanamine, le N-(4-N,N-diméthylaminobenzylidène)-3-(triméthoxysilyl)-1-propanamine, le N-(4-N,N-diméthylaminobenzylidène)-3-(triéthoxysilyl)-1-propanamine, le N-(cyclohexylidène)-3-(triméthoxysilyl)-1-propanamine, le N-(cyclohexylidène)-3-(triéthoxysilyl)-1-propanamine, le N-(3-triméthoxysilylpropyl)-4,5-dihydroimidazole, le N-(3-triéthoxysilylpropyl)-4,5-dihydroimidazole, le N-(3-triméthoxysilylpropyl)-4,5-imidazole et le N-(3-triéthoxysilylpropyl)-4,5-imidazole.

Selon des variantes de l'invention, la fonction susceptible d'interagir avec une charge renforçante est une fonction cyano. Préférentiellement, l'agent de fonctionnalisation peut être choisi parmi le 3-(cyanopropyl)triméthoxysilane et le 3-(cyanopropyl)triéthoxysilane.

Selon des variantes de l'invention, la fonction susceptible d'interagir avec une charge renforçante est une fonction thiol, protégée ou non. On peut citer à titre d'exemple les (S-trialkylsilylmercaptopropyl)trialcoxysilanes. Préférentiellement, l'agent de fonctionnalisation peut être choisi parmi le (S-triméthylsilylmercaptopropyl)triméthoxysilane, le (S-triméthylsilylmercaptopropyl)triéthoxysilane, le (S-tert-butyldiméthylsilylmercaptopropyl)triméthoxysilane et le (S-tert-butyldiméthylsilylmercaptopropyl)triéthoxysilane.

Selon des variantes de l'invention, la fonction susceptible d'interagir avec une charge renforçante est une fonction carboxylate. A titre de fonction carboxylate, on peut citer les acrylates ou les méthacrylates. Une telle fonction est de préférence un méthacrylate. Préférentiellement, l'agent de fonctionnalisation peut être choisi parmi le 3-(méthacryloyloxypropyl)triméthoxysilane, et le 3-(méthacryloyloxypropyl)triéthoxysilane.

Selon des variantes de l'invention, la fonction susceptible d'interagir avec une charge renforçante est une fonction époxyde. Préférentiellement, l'agent de fonctionnalisation peut être choisi parmi le 2-(glycidyloxyéthyl)triméthoxysilane, le 2-(glycidyloxyéthyl)triéthoxysilane le 3-(glycidyloxypropyl)triméthoxysilane, le 3-(glycidyloxypropyl)triéthoxysilane, le 2-(3,4-époxycyclohexyl)-éthyltriméthoxysilane et le 2-(3,4-époxycyclohexyl)-éthyltriéthoxysilane.

Selon des variantes de l'invention, la fonction susceptible d'interagir avec une charge renforçante est une fonction phosphine primaire, protégée ou non, secondaire, protégée ou non, ou tertiaire. Préférentiellement, l'agent de fonctionnalisation peut être choisi parmi le 3-(P,P-bistriméthylsilylphosphinopropyl)triméthoxysilane, le 3-(P,P-bistriméthylsilylphosphinopropyl)triéthoxysilane, le 3-(méthyltriméthylsilylphosphinopropyl)triméthoxysilane, le 3-(méthyltriméthylsilylphosphinopropyl)triéthoxysilane, le 3-(éthyltriméthylsilylphosphinopropyl)triméthoxysilane, le 3-(éthyltriméthylsilylphosphinopropyl)triéthoxysilane, le 3-(diméthylphosphinopropyl)triméthoxysilane, le 3-(diméthylphosphinopropyl)triéthoxysilane, le 3-(diéthylphosphinopropyl)triméthoxysilane, le 3-(diéthylphosphinopropyl)triéthoxysilane, le 3-(éthylméthylphosphinopropyl)triméthoxysilane, le 3-(éthylméthylphosphinopropyl)triéthoxysilane, le 3-(diphénylphosphinopropyl)triméthoxysilane et le 3-(diphénylphosphinopropyl)triéthoxysilane.

Ces agents de fonctionnalisation satisfont l'un des critères essentiels selon lequel le rapport des constantes cinétiques K est supérieur à 1, de préférence supérieur ou égal à 10, voire supérieur ou égal à 100.

Selon des variantes avantageuses de l'invention, au moins une des trois caractéristiques suivantes est respectée et de préférence les trois:

- la fonction susceptible d'interagir avec une charge renforçante est une amine tertiaire, plus particulièrement la diéthylamine ou la diméthylamine,

- le groupement espaceur est un radical radical hydrocarboné divalent linéaire aliphatique en $C_1$-$C_6$, plus préférentiellement encore le radical hydrocarboné linéaire en $C_3$,

- dans le groupement trialcoxysilane, les radicaux alkyles sont identiques et ont 1 à 4 atomes de carbone, de préférence 1 ou 2.

Le rapport molaire de l'agent de couplage au métal de l'initiateur de polymérisation dépend essentiellement du type d'élastomère diénique modifié voulu. Ainsi, avec un rapport allant de 0,40 à 0,75, préférentiellement de 0,45 à 0,65 et encore plus préférentiellement de 0,45 à 0,55, on privilégie la formation d'espèces couplées au sein de l'élastomère modifié. De la même manière, avec un rapport allant de 0,15 à 0,40, préférentiellement de 0,20 à 0,35, encore plus préférentiellement de 0,30 à 0,35, on forme majoritairement des espèces étoilées (3 branches) au sein de l'élastomère modifié. Avec un rapport supérieur ou égal à 0,75, préférentiellement supérieur à 1, on forme majoritairement des espèces fonctionnalisées en bout de chaîne.

Un autre élément essentiel de l'étape de modification selon l'invention réside dans la mise en contact en continu de l'élastomère diénique vivant et de l'agent de fonctionnalisation dans un dispositif de fonctionnalisation, composé d'au moins un réacteur, présentant une distribution de temps de séjours caractérisée par l'une des équations 1 et 3 ci-dessus.

La combinaison du modèle cinétique de fonctionnalisation défini plus haut au modèle du dispositif réactionnel de fonctionnalisation qui satisfait l'équation 1 ou l'équation 3, permet l'obtention, selon un procédé continu adapté à une production industrielle économiquement intéressante d'un élastomère diénique modifié avec une maîtrise de la répartition des espèces au sein de l'élastomère.

Il est notamment possible par la mise en œuvre du procédé de l'invention de procéder de manière compétitive, économique et flexible, adaptable à une production industrielle, à la synthèse d'un nouvel élastomère diénique modifié qui confère à une composition le contenant un compromis de propriété hystérèse et mise en œuvre à cru optimal, sans pénaliser les propriétés de l'élastomère notamment sa résistance au fluage à froid. Par exemple, il est possible d'obtenir directement cet élastomère diénique modifié en modifiant l'élastomère diénique vivant avec un rapport molaire agent de fonctionnalisation à l'initiateur de polymérisation compris dans le domaine de 0,48 à 0,52. Cet élastomère comprend:

a) au moins 55% en poids par rapport au poids total de l'élastomère diénique modifié, d'espèce couplée par un groupement fonctionnel porteur d'une fonction de formule -SiOR, dans laquelle R est un atome d'hydrogène ou un radical alkyle ayant 1 à 10 atomes de carbone, et éventuellement d'une fonction susceptible d'interagir avec une charge renforçante, le groupement étant lié aux deux branches de l'élastomère diénique par l'intermédiaire de l'atome de silicium,

b) de 5% en poids à 30% en poids par rapport au poids total de l'élastomère diénique modifié, d'espèce étoilée possédant trois branches élastomériques reliées à un même atome de silicium appartenant à un groupement fonctionnel porteur ou non d'une fonction susceptible d'interagir avec une charge renforçante,

c) d'un taux inférieur ou égal à 15% en poids par rapport au poids total de l'élastomère diénique modifié, d'espèce fonctionnalisée en extrémité de chaîne par un groupement fonctionnel porteur d'une fonction $-Si(OR)_2$, dans laquelle R est un atome d'hydrogène ou un radical alkyle ayant 1 à 10 atomes de carbone, et éventuellement d'une fonction susceptible d'interagir avec une charge renforçante, le groupement étant lié à l'élastomère diénique par l'intermédiaire de l'atome de silicium,

et d) d'un taux inférieur ou égal à 15% en poids par rapport au poids total de l'élastomère diénique modifié d'élastomère diénique non fonctionnel.

Cet élastomère diénique modifié fait également l'objet de la présente invention. Il confère aux compositions

de caoutchouc le contenant une amélioration remarquable et inattendue du compromis mise en œuvre à cru / hystérèse, tout en préservant une résistance au fluage à froid satisfaisante sans l'adjonction d'un agent d'étoilage ou de couplage supplémentaire.

Concernant l'espèce étoilée b), l'élastomère diénique modifié comprend de préférence au moins 10% en poids par rapport au poids total de l'élastomère diénique modifié de ladite espèce étoilée b). Préférentiellement également, l'élastomère diénique modifié comprend au plus 25%, de préférence encore au plus 20% en poids par rapport au poids total de l'élastomère diénique modifié de ladite espèce étoilée b).

Concernant l'espèce non fonctionnelle d), l'élastomère diénique modifié comprend de préférence un taux strictement supérieur à 0% en poids et inférieur à 10% en poids, par rapport au poids total de l'élastomère diénique modifié de ladite espèce non fonctionnelle d).

Concernant l'espèce couplée a), l'élastomère diénique modifié comprend de préférence un taux supérieur ou égal à 65%, voire supérieur ou égal à 70%, en poids par rapport au poids total de l'élastomère diénique modifié de ladite espèce couplée a).

Concernant l'espèce fonctionnalisée en extrémité de chaîne c), l'élastomère diénique modifié comprend de préférence un taux inférieur ou égal à 10% en poids par rapport au poids total de l'élastomère diénique modifié de ladite espèce fonctionnalisée en extrémité de chaîne c).

Les aspects préférentiels concernant les espèces a), b), c) et d) sont combinables entre eux.

Par élastomère diénique, on entend selon l'invention tout homopolymère obtenu par polymérisation d'un monomère diène conjugué ayant de 4 à 12 atomes de carbone, ou tout copolymère à bloc, statistique, séquencé ou microséquencé, obtenu par copolymérisation d'un ou plusieurs diènes conjugués entre eux ou avec un ou plusieurs composés vinylaromatiques ayant de 8 à 20 atomes de carbone. Dans le cas de copolymères, ceux-ci contiennent de 20 % à 99 % en poids d'unités diéniques, et de 1 à 80 % en poids d'unités vinylaromatiques.

A titre préférentiel, l'élastomère diénique est choisi parmi les polybutadiènes, les copolymères butadiène-styrène, les copolymères butadiène-styrène-isoprène, les copolymères styrène-isoprène, les copolymères butadiène-isoprène et le polyisoprène de synthèse. Avantageusement, l'élastomère diénique est un copolymère butadiène-styrène.

Le procédé de synthèse de l'élastomère diénique modifié selon l'invention peut se poursuivre de manière connue en soi par les étapes de récupération de l'élastomère modifié.

Selon les variantes de l'invention selon lesquelles l'agent de fonctionnalisation est porteur d'une fonction amine primaire ou secondaire protégée, le procédé de synthèse peut se poursuivre par une étape de déprotection de l'amine primaire ou secondaire. Cette étape est mise en œuvre après la réaction de modification. On peut à titre d'exemple faire réagir les chaînes fonctionnalisées par le groupement amine protégé avec un acide, une base, un dérivé fluoré tel le fluorure de tétrabutylammonium, un sel d'argent tel que le nitrate d'argent, etc...pour déprotéger cette fonction amine. Ces différentes méthodes sont décrites dans l'ouvrage « Protective Groups in Organic Synthesis, T. W. Green, P. G. M. Wuts, Third Edition,1999 ». Cette étape de déprotection peut avoir pour effet d'hydrolyser tout ou partie des fonctions alcoxysilanes hydrolysables de l'élastomère diénique modifié pour les transformer en fonctions silanol.

Selon les variantes de l'invention selon lesquelles l'agent de fonctionnalisation est porteur d'une fonction thiol protégée, le procédé de synthèse peut se poursuivre par une étape de déprotection du thiol. Cette étape est mise en œuvre après la réaction de modification. On peut à titre d'exemple faire réagir les chaînes fonctionnalisées par le groupement thiol protégé avec de l'eau, un alcool, ou un acide (acide chlorhydrique, acide sulfurique, acide carboxylique). Cette étape de déprotection peut avoir pour effet d'hydrolyser tout ou partie des fonctions alcoxysilanes hydrolysables de l'élastomère diénique modifié pour les transformer en fonctions silanol.

Selon les variantes de l'invention selon lesquelles l'agent de fonctionnalisation est porteur d'une fonction phosphine primaire ou secondaire protégée, le procédé de synthèse peut se poursuivre par une étape de déprotection de la phosphine. Cette étape est mise en œuvre après la réaction de modification. On peut à titre d'exemple faire réagir les chaînes fonctionnalisées par le groupement phosphine protégé avec de l'eau, un alcool, ou un acide (acide chlorhydrique, acide sulfurique, acide carboxylique). Cette étape de déprotection peut avoir pour effet d'hydrolyser tout ou partie des fonctions alcoxysilanes hydrolysables de l'élastomère diénique modifié pour les transformer en fonctions silanol.

Selon des variantes de l'invention, le procédé de synthèse peut comprendre une étape d'hydrolyse des fonctions alcoxysilanes hydrolysables, par adjonction d'un composé acide, basique ou neutre tel que décrit dans le document EP 2 266 819 A1. Les fonctions hydrolysables sont alors transformées en fonction silanol.

Le procédé de synthèse de l'élastomère diénique modifié selon l'invention peut se poursuivre de manière connue en soi par les étapes de récupération de l'élastomère modifié.

Selon des variantes de ce procédé, ces étapes comprennent une étape de stripping en vue de récupérer l'élastomère issu des étapes antérieures sous forme sèche. Cette étape de stripping peut avoir pour effet d'hydrolyser tout ou partie des fonctions alcoxysilanes hydrolysables de l'élastomère diénique modifié pour les transformer en fonctions silanol. Avantageusement, au moins 50 à 70% molaire des fonctions peuvent ainsi être hydrolysées..

L'invention a également pour objet toute installation destinée à la mise en œuvre du procédé de synthèse en

continu d'un élastomère diénique et appropriée pour une application à l'échelle industrielle telle que décrite dans la revendication 14.

L'installation selon l'invention comprend un dispositif de polymérisation alimenté en continu par un flux de monomères et un flux d'initiateur de polymérisation anionique. L'installation selon l'invention comprend également un dispositif de modification alimenté en continu par un flux d'élastomère vivant issu du réacteur de polymérisation et par un flux en agent de fonctionnalisation.

Le dispositif de polymérisation peut être constitué de manière connue en soi d'au moins un réacteur de polymérisation. Il peut avoir pour modèle au moins un réacteur continu agité, supposé parfaitement agité.

Le dispositif pour la fonctionnalisation de l'élastomère diénique vivant doit permettre un écoulement satisfaisant l'une des équations 1 et 3 définies plus haut. Ainsi, ce dispositif peut avoir pour modèle l'un des modèles suivants:

- un réacteur tubulaire avec dispersion axiale, ou alternativement,
- un réacteur tubulaire avec dispersion axiale en série avec au moins un réacteur continu agité, supposé parfaitement agité, ou alternativement,
- au moins un réacteur tubulaire avec dispersion axiale, en série avec un réacteur continu agité, supposé parfaitement agité, ou alternativement,
- plusieurs réacteurs tubulaires avec dispersion axiale en série avec plusieurs réacteurs continus agités, supposés parfaitement agités, ou alternativement,
- au moins deux réacteurs continus agités, supposés parfaitement agités, en série.

Le temps de séjour dans chaque réacteur tubulaire avec dispersion axiale est de préférence compris entre 0 et 10 minutes, plus préférentiellement entre 0,1 et 5 minutes.

Le temps de séjour dans chaque réacteur continu parfaitement agité, supposé parfaitement agité, est de préférence compris entre 5 et 60 minutes, plus préférentiellement entre 10 et 50 minutes,

À titre illustratif et non limitatif, deux installations pour la synthèse en continu d'un élastomère diénique conformément à deux modes de réalisation du procédé de synthèse de l'invention sont plus particulièrement décrites par référence aux Figures 1 et 2, chacune constituant une représentation schématique d'une installation.

La Figure 1 est un schéma d'une installation pouvant être intégrée à une unité de préparation en continu d'un élastomère diénique modifié conformément à un mode de réalisation de l'invention selon lequel le dispositif de modification comprend un réacteur de type tubulaire et un réacteur continu agité.

La Figure 2 est un schéma d'une installation pouvant être intégrée à une unité de préparation en continu d'un élastomère diénique modifié conformément à un mode de réalisation de l'invention selon lequel le dispositif de modification comprend deux réacteurs de type tubulaire et un réacteur continu agité.

L'installation illustrée à la Figure 1 comporte un réacteur de polymérisation 1 au moins relié :

- à plusieurs sources d'alimentation en continu dont au moins une source d'alimentation 2 en initiateur de polymérisation, une source d'alimentation 3 en au moins un monomère, le cas échéant mélangé à un solvant hydrocarboné inerte, et
- à une sortie adaptée pour évacuer dudit réacteur 1, en continu, l'élastomère diénique vivant en un flux sortant 4 par un dispositif de décharge.

L'installation illustrée à la Figure 1 comporte en outre un dispositif de fonctionnalisation 5 de l'élastomère diénique vivant en aval du réacteur de polymérisation 1.

Le dispositif de fonctionnalisation est composé de deux réacteurs en série, à savoir un réacteur 6 de type tubulaire avec mélangeur statique kenics et un réacteur 7 continu agité, supposé parfaitement agité.

Le dispositif de fonctionnalisation 5 est au moins muni :

- d'une entrée reliée à une source d'alimentation en élastomère déchargée du réacteur de polymérisation 1,
- d'une entrée reliée à une source d'alimentation 8 en agent de fonctionnalisation et,
- d'une sortie adaptée pour évacuer du dispositif de fonctionnalisation, en continu, l'élastomère modifié en un flux sortant 8.

Le flux sortant d'élastomère modifié 9 est acheminé en aval de la ligne de production vers un dispositif de récupération de l'élastomère diénique modifié, non illustré sur la Figure. Ce dispositif peut comprendre des éléments classiques tels que par exemple granulateur, dispositif destiné à l'élimination du solvant, du ou des monomères résiduels, du ou des autres réactifs résiduels (agent de fonctionnalisation...)...

L'installation illustrée à la Figure 2 comporte les mêmes éléments que ceux représentés à la Figure 1, jusqu'au réacteur de polymérisation 1.

La différence réside dans le dispositif de fonctionnalisation 10, qui est composé dans l'installation illustrée à la Figure 2, de deux réacteurs de type tubulaire 11 et 12 et d'un réacteur continu agité 13.

Les caractéristiques précitées de la présente invention, ainsi que d'autres, seront mieux comprises à la lecture de la description suivante de plusieurs exemples de réalisation de l'invention, donnés à titre illustratif et non limitatif.

## I- MESURES ET TESTS UTILISES

### (a) Détermination de la distribution de masses molaires des élastomères par la technique de chromatographie d'exclusion stérique (SEC conventionnelle)

La technique SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

Il n'y a pas de traitement particulier de l'échantillon de polymère avant analyse. Celui-ci est simplement solubilisé dans le solvant d'élution à une concentration d'environ 1 $g.L^{-1}$. Puis la solution est filtrée sur filtre de porosité 0,45 $\mu$m avant injection.

L'appareillage utilisé est une chaîne chromatographique "WATERS alliance". Le solvant d'élution est soit le tétrahydrofurane, soit le tétrahydrofurane + 1 %vol. de diisopropylamine + 1%vol. de triéthylamine, le débit de 1 $mL.min^{-1}$, la température du système de 35° C et la durée d'analyse de 30 min. Un jeu de deux colonnes WATERS de dénomination commerciale "STYRAGEL HT6E" est utilisé. Le volume injecté de la solution de l'échantillon de polymère est 100 $\mu$L. Le détecteur est un réfractomètre différentiel "WATERS 2410" et le logiciel d'exploitation des données chromatographiques est le système "WATERS EMPOWER".

Les masses molaires moyennes calculées sont relatives à une courbe d'étalonnage réalisée pour des SBR de microstructure suivante : 25% massique de motifs type styrène, 23% massique de motifs type 1-2 et 50% massique de motifs type 1-4 trans.

### (b) Détermination de la répartition des chaînes fonctionnalisées en extrémité de chaîne, en milieu de chaîne et étoilées 3 branches par la technique de chromatographie d'exclusion stérique haute résolution (SEC haute résolution)

La technique de SEC haute résolution est utilisée pour déterminer les pourcentages massiques des différentes populations de chaînes présentes dans un échantillon de polymère.

Il n'y a pas de traitement particulier de l'échantillon de polymère avant analyse. Celui-ci est simplement solubilisé dans le solvant d'élution à une concentration d'environ 1 $g.L^{-1}$. Puis la solution est filtrée sur filtre de porosité 0,45 $\mu$m avant injection.

L'appareillage utilisé est une chaîne chromatographique "WATERS alliance 2695". Le solvant d'élution est le tétrahydrofurane, le débit de 0,2 $ml.min^{-1}$, la température du système de 35 °C. Un jeu de trois colonnes identiques en série est utilisé (Shodex, longueur 300 mm, diamètre 8 mm). Le nombre de plateaux théoriques du jeu de colonnes est supérieur à 22 000. Le volume injecté de la solution de l'échantillon de polymère est 50 $\mu$L. Le détecteur est un réfractomètre différentiel "WATERS 2414" et le logiciel d'exploitation des données chromatographiques est le système "WATERS EMPOWER".

Les masses molaires calculées sont relatives à une courbe d'étalonnage réalisée pour des SBR de microstructure suivante : 25 % massique de motifs type styrène, 23 % massique de motifs type 1,2 et 50 % massique de motifs type 1,4-trans.

**(c) Caractérisation de la microstructure des élastomères par la technique de spectroscopie proche infrarouge (NIR)**

La spectroscopie proche infrarouge (NIR) est utilisée pour déterminer quantitativement le taux massique de styrène dans l'élastomère ainsi que sa microstructure (répartition relative des unités butadiène 1,2, 1,4-trans et 1,4 cis). Le principe de la méthode repose sur la loi de Beer-Lambert généralisée à un système multicomposants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN $^{13}C$. Le taux de styrène et la microstructure sont alors calculés à partir du spectre NIR d'un film d'élastomère d'environ 730 $\mu$m d'épaisseur. L'acquisition du spectre est réalisée en mode transmission entre 4000 et 6200 $cm^{-1}$ avec une résolution de 2 $cm^{-1}$, à l'aide d'un spectromètre proche infrarouge à transformée de Fourier Bruker Tensor 37 équipé d'un détecteur InGaAs refroidi par effet Peltier.

**(d) Détermination des viscosités Mooney $ML_{(1+4)}$100 °C pour les élastomères et les compositions de caoutchouc selon la norme ASTM D-1646**

Un consistomètre oscillant est utilisé tel que décrit dans la norme ASTM D-1646. La mesure de plasticité Mooney se fait selon le principe suivant : l'élastomère (ou la composition à l'état cru (i.e. avant cuisson)) est moulé(e) dans une enceinte cylindrique chauffée à 100 °C. Après une minute de préchauffage, le rotor tourne au sein de l'éprouvette à 2 $tr.min^{-1}$ et le couple utile pour entretenir ce mouvement après 4 minutes de rotation est mesuré. La plasticité Mooney ($ML_{(1+4)}$) est exprimée en "unité Mooney" (UM, avec 1 UM = 0,83 N.m).

**(e) Détermination des températures de transition vitreuse (Tg) des élastomères au moyen d'un calorimètre différentiel ("differential scanning calorimeter").**

**(f) Détermination de la viscosité inhérente des élastomères à 25 °C à partir d'une solution d'élastomère à 0,1 $g.dL^{-1}$ dans le toluène, selon le principe suivant :**

La viscosité inhérente est déterminée par la mesure du temps d'écoulement *t* de la solution de polymère et du temps d'écoulement $t_0$ du toluène, dans un tube capillaire.

Dans un tube Ubbelhode (diamètre du capillaire 0,46 mm, capacité 18 à 22 mL), placé dans un bain thermostaté à 25 $\pm$ 0,1 °C, le temps d'écoulement du toluène et celui de la solution polymère à 0,1 $g.dL^{-1}$ sont mesurés.

La viscosité inhérente est obtenue par la relation suivante :

$$\eta_{inh} = \frac{1}{C} \ln\left[\frac{(t)}{(t_0)}\right]$$

avec :

- **C** : concentration de la solution de polymère dans le toluène en $g.dL^{-1}$,
- ***t*** : temps d'écoulement de la solution de polymère dans le toluène en seconde,
- $\boldsymbol{t_0}$ : temps d'écoulement du toluène en seconde,
- $\eta_{inh}$ : viscosité inhérente exprimée en $dL.g^{-1}$.

La mesure de la viscosité inhérente "initiale", qui est la viscosité du polymère avant fonctionnalisation, et de la viscosité inhérente "finale", qui est la viscosité du polymère après fonctionnalisation, nous permet de calculer le saut de viscosité qui est le rapport de ladite viscosité inhérente "finale" sur ladite viscosité inhérente "initiale".

**(g) Détermination du cold flow des élastomères ($CF_{(1+6)}$100°C) selon la méthode de mesure suivante** :

Il s'agit de mesurer la masse de gomme extrudée à travers une filière calibrée pendant un temps donné (6 heures) et dans des conditions fixées (T = 100 °C). La filière a un diamètre de 6,35 mm, une épaisseur de 0,5 mm et est située au fond et au centre d'une coupe cylindrique évidée de 52 mm de diamètre.

Dans ce dispositif sont placés 40 $\pm$ 4 g de gomme préalablement mise sous forme de pastille (2 cm d'épaisseur et 52 mm de diamètre). Sur la pastille de gomme est positionné un piston calibré de 1 kg ($\pm$ 5 g). L'ensemble est ensuite placé dans une étuve à 100 $\pm$ 0,5 °C.

Les conditions n'étant pas stabilisées lors de la première heure dans l'étuve, le produit extrudé à t = 1 heure est découpé puis jeté.

La mesure est ensuite poursuivie pendant 6 heures ± 5 mn, durant lesquelles le produit est laissé dans l'étuve. A l'issue des 6 heures, l'échantillon de produit extrudé est découpé puis pesé. Le résultat de la mesure est la masse de gomme pesée. Plus ce résultat est faible, plus l'élastomère résiste au fluage à froid.

**(h) Détermination des propriétés dynamiques tan δ max**

Les propriétés dynamiques notamment tan δ max sont mesurées sur un viscoanalyseur (Metravib VA4000), selon la norme ASTM D 5992-96. La réponse d'un échantillon de composition vulcanisée (éprouvette cylindrique de 2 mm d'épaisseur et de 79 mm2 de section), soumis à une sollicitation sinusoïdale en cisaillement simple alterné, à la fréquence de 10 Hz, est enregistrée dans les conditions normales de température (23 °C) selon la norme ASTM D 1349-99. Un balayage en amplitude de déformation crête-crête de 0,1 % à 50 % (cycle aller), puis de 50 % à 0,1 % (cycle retour), est réalisé. Le résultat exploité est le facteur de perte tan δ. Pour le cycle retour, la valeur maximale de tan δ observée (tan δ max) est indiquée. Cette valeur est représentative de l'hystérèse du matériau et dans le cas présent de la résistance au roulement : plus la valeur de tan δ max est faible, plus la résistance au roulement est basse.

**(i) Détermination de la répartition des espèces d'un élastomère modifié.**

1- Exemple de détermination du rapport de constantes cinétiques (K) du modèle cinétique de fonctionnalisation en réacteur agité discontinu

**Détermination expérimentale du pourcentage massique des chaînes fonctionnalisées en extrémité de chaîne, en milieu de chaîne et étoilées (3 branches) et du saut de viscosité en fonction du rapport molaire 3-(N,N-diméthylaminopropyl)triméthoxysilane /n-BuLi**

Dans onze bouteilles en verre (bouteilles steinie) de 250 mL sont introduits 91,6 mL (70,5 g) de méthylcyclohexane, 14,8 mL (9,65 g) de butadiène et 0,49 mL d'une solution de tetrahydrofurfuryl éther dans le méthylcyclohexane à 0,078 mol.L$^{-1}$. Après neutralisation des impuretés dans la solution à polymériser par addition de n-Butyllithium (n-BuLi), 1,90 mL de n-BuLi à 0,097 mol.L$^{-1}$ dans le méthylcyclohexane sont ajoutés. La polymérisation est conduite à 60 °C. Après 15 minutes, le taux de conversion en monomère atteint 95 %. Ce taux est déterminé par pesée d'un extrait séché à 140 °C, sous la pression réduite de 200 mmHg. Une bouteille témoin (bouteille n°1) est stoppée avec un excès de méthanol par rapport au lithium. La viscosité inhérente "initiale" est de 0,66 dL.g$^{-1}$. 0,88 mL d'une solution de 3-(N,N-diméthylaminopropyl)triméthoxysilane à 0,1 mol.L$^{-1}$ dans le méthylcyclohexane sont ajoutés aux solutions de polymère vivant (0,48 éq. molaire *vs* Li) contenues dans les bouteilles 2 à 9, 0,73 mL de cette même solution sont ajoutés dans la bouteille 10 (0,40 éq. molaire *vs* Li) et 1,83 mL de cette même solution sont ajoutés dans la bouteille 11 (1,0 éq. molaire *vs* Li). Après 15 minutes de réaction à 60 °C, les solutions sont antioxydées par addition de 0,4 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Les polymères ainsi traités sont séparés de leur solution par séchage à 60 °C sous pression réduite et courant d'azote pendant 12 heures.

Les viscosités inhérentes "finales", les sauts de viscosité définis comme les rapports des viscosités inhérentes "finales" sur la viscosité inhérente "initiale" ainsi que les pourcentages massiques des chaînes désactivées (P), des chaînes fonctionnalisées en extrémité de chaîne (PA), en milieu de chaîne ($P_2A$) et étoilées ($P_3A$) sont présentées dans le Tableau 1 ci-dessous.

**Tableau 1** - Evolution de la répartition des espèces P+PA/$P_2A$/$P_3A$ et du saut de viscosité en fonction du rapport molaire 3-(N,N-diméthylaminopropyl)triméthoxysilane/n-BuLi.

| Bouteille | Rapport molaire 3-(N,N-diméthylaminopropyl)triméthoxysilane / Li | Saut de viscosité | P+PA/$P_2A$/$P_3A$ (wt.%) |
|---|---|---|---|
| 2 | 0,48 | | 12/77/10 |
| 3 | 0,48 | | 13/77/9 |
| 4 | 0,48 | | 13/78/9 |
| 5 | 0,48 | | 13/82/5 |
| 6 | 0,48 | | 13/83/5 |

(suite)

| Bouteille | Rapport molaire 3-(N,N-diméthylaminopropyl)triméthoxysilane / Li | Saut de viscosité | P+PA/$P_2$A/$P_3$A (wt.%) |
|---|---|---|---|
| 7 | 0,48 | | 13/83/4 |
| 8 | 0,48 | | 14/83/4 |
| 9 | 0,48 | 1,54 | 11/84/4 |
| 10 | 0,40 | 1,61 | 15/53/25 |
| 11 | 1,00 | 1,09 | 72/20/7 |

L'élastomère diénique vivant est fonctionnalisé selon le mécanisme réactionnel suivant :

R1 $$PLi + A \xrightarrow{k_1} PA$$

R2 $$PLi + PA \xrightarrow{k_2} P_2A$$

R3 $$PLi + P_2A \xrightarrow{k_3} P_3A$$

dont le modèle de la cinétique des réactions est supposé :

R1 $V_1 = k_1\ [PLi\text{I}A]$

R2 $V_2 = k_2\ [PLi\text{I}PA]$

R3 $V_3 = k_3[PLi\text{I}P_2A]$

où :

$k_1$, $k_2$ et $k_3$ sont les constantes cinétiques des réactions R1, R2 et R3 ($m^3$/mol/s),

[PLi] est la concentration de chaînes vivantes (mol/$m^3$),

[A] est la concentration de l'agent de fonctionnalisation aminotrialcoxysilane A (mol/$m^3$). L'agent de fonctionnalisation A est caractérisé par un rapport de constantes cinétiques K

$$K = \frac{k_1}{k_2} = \frac{k_2}{k_3}$$

[PA] est la concentration de polymère fonctionnalisé en bout de chaîne (mol/$m^3$),

[$P_2$A] est la concentration de polymère fonctionnalisé en milieu de chaîne (mol/$m^3$),

[$P_3$A] est la concentration de polymère étoilé (mol/$m^3$).

Le modèle cinétique de fonctionnalisation intégré, selon l'homme d'art, à un modèle de réacteur parfaitement agité discontinu (bibliographie : Villermeaux, J; Génie de la réaction chimique; 1993) permet de déterminer la répartition d'espèces PLi, PA, $P_2$A et $P_3$A. De plus, les chaînes peuvent être désactivées (P) lors de l'étape de polymérisation ou/et fonctionnalisation. Ainsi, le produit final est un mélange d'élastomère désactivé (P), élastomère fonctionnalisé bout de chaîne (PA), élastomère fonctionnalisé milieu de chaîne ($P_2$A) et élastomère étoilé ($P_3$A).

Pour les points expérimentaux du Tableau 1 ci-dessus, nous avons estimé la valeur de $K=10^{2\pm1}$ selon la description du modèle de réacteur parfaitement agité discontinu, qui représente le réacteur utilisé pour ces expériences.

La Figure 3 représente la répartition des espèces P, PA, $P_2$A et $P_3$A en fonction du rapport molaire agent de fonctionnalisation/chaînes polymère vivantes (PLi) : simulé (lignes) et mesuré (points).

2- Exemple de détermination de la cinétique de fonctionnalisation en réacteur agité discontinu

**Détermination expérimentale du pourcentage massique des chaînes fonctionnalisées en extrémité de chaîne, en milieu de chaîne et étoilées (3 branches) en fonction du temps de couplage avec le 3-(N,N-diméthylaminopropyl)triméthoxysilane (~ 0,5 éq. mol *vs* Li)**

Dans vingt-deux bouteilles en verre (bouteilles steinie) de 250 mL sont introduits 91,6 mL (70,5 g) de méthylcyclohexane, 14,8 mL (9,65 g) de butadiène et 0,49 mL d'une solution de tetrahydrofurfuryl éther dans le méthylcyclohexane à 0,078 mol.$L^{-1}$. Après neutralisation des impuretés dans la solution à polymériser par addition de n-Butyllithium (n-BuLi), 1,90 mL de n-BuLi à 0,097 mol.$L^{-1}$ dans le méthylcyclohexane sont ajoutés. La polymérisation est conduite à 60 °C.

Après 15 minutes, le taux de conversion en monomère atteint 95 %. Ce taux est déterminé par pesée d'un extrait séché à 140 °C, sous la pression réduite de 200 mmHg, 0,88 mL d'une solution de 3-(N,N-diméthylaminopropyl)triméthoxysilane à 0,1 mol.$L^{-1}$ dans le méthylcyclohexane sont ajoutés aux solutions de polymère vivant (0,48 éq. molaire *vs* Li) contenues dans les vingt et une bouteilles restantes. Après 10 secondes (bouteilles 12, 13 et 14), 15 secondes (bouteilles 15, 16 et 17), 20 secondes (bouteilles 18, 19 et 20), 30 secondes (bouteilles 21 et 22), 2 minutes (bouteille 23) et 15 minutes (bouteilles 24, 25, 26, 27, 28, 29, 30, 31 et 32) de réaction à 60 °C, les solutions sont antioxydées par addition de 0,4 partie pour cent parties d'élastomère (pce) de 4,4'-méthylène-bis-2,6-tert-butylphénol et de 0,2 partie pour cent parties d'élastomère (pce) de *N*-(1,3-diméthylbutyl)-N'-phényl-p-phénylènediamine. Les polymères ainsi traités sont séparés de leur solution par séchage à 60 °C sous pression réduite et courant d'azote pendant 12 heures.

Les pourcentages massiques des chaînes désactivées (P), des chaînes fonctionnalisées en extrémité de chaîne (PA), en milieu de chaîne ($P_2A$) et étoilées ($P_3A$) sont présentées dans le Tableau 2 ci-dessous.

**Tableau 2** - Evolution de la répartition des espèces P+PA/$P_2A$/$P_3A$ en fonction du temps de réaction avec le 3-(N, N-diméthylaminopropyl)triméthoxysilane.

| Bouteille | Temps de réaction avec le 3-(N,N-diméthylaminopropyl)-triméthoxysilane | P+PA (wt.%) | $P_2A$ (wt.%) | $P_3A$ (wt.%) |
|---|---|---|---|---|
| 12 | 10 s | 23 | 76 | 1 |
| 13 | 10 s | 23 | 76 | 1 |
| 14 | 10 s | 22 | 77 | 1 |
| 15 | 15 s | 19 | 79 | 1 |
| 16 | 15 s | 20 | 79 | 1 |
| 17 | 15 s | 19 | 79 | 1 |
| 18 | 20 s | 18 | 81 | 1 |
| 19 | 20 s | 17 | 81 | 1 |
| 20 | 20 s | 18 | 81 | 1 |
| 21 | 30 s | 16 | 82 | 2 |
| 22 | 30 s | 14 | 83 | 2 |
| 23 | 2 min | 11 | 86 | 2 |
| 24 | 15 min | 12 | 77 | 10 |
| 25 | 15 min | 13 | 77 | 9 |
| 26 | 15 min | 13 | 78 | 9 |
| 27 | 15 min | 13 | 82 | 5 |
| 28 | 15 min | 13 | 83 | 4 |
| 29 | 15 min | 13 | 83 | 4 |
| 30 | 15 min | 14 | 83 | 4 |
| 31 | 15 min | 11 | 84 | 4 |

(suite)

| Bouteille | Temps de réaction avec le 3-(N,N-diméthylaminopropyl)-triméthoxysilane | P+PA (wt.%) | $P_2A$ (wt.%) | $P_3A$ (wt.%) |
|---|---|---|---|---|
| 32 | 15 min | 9 | 88 | 3 |

En utilisant le même modèle cinétique de l'exemple précèdent et la valeur de K=$10^{2\pm1}$, la valeur de $k_1$[PLi], dans le modèle cinétique, est estimée à $10^{4\pm0.2}$. La Figure 4 compare les rendements simulés aux rendements mesurés en fonction du temps de réaction en réacteur discontinu parfaitement agité.

**3- Exemple de détermination du rapport de constantes cinétiques (K) de fonctionnalisation en configuration continue**

Dans une installation pilote de polymérisation continue, à la sortie du réacteur agité de polymérisation continu, supposé parfaitement agité, une quantité variable d'agent de fonctionnalisation est injectée afin de caractériser la section de fonctionnalisation continue. La section de fonctionnalisation est composée d'un mélangeur statique type kenics à 36 éléments de 4 L et d'un réacteur continu agité de volume 32,5 L, supposé parfaitement agité. Le temps de séjour minimal dans les réacteurs agités est de 20 minutes.

Dans un réacteur agité continu de 32,5 L, supposé parfaitement agité selon l'homme de l'art, sont introduits en continu du méthylcyclohexane, du butadiène, du styrène et du tétrahydrofurfuryl éthyle éther, selon les proportions suivantes : débit massique butadiène = 2,85 $kg.h^{-1}$, débit massique styrène = 1,25 $kg.h^{-1}$, concentration massique en monomère = 11 wt.%, 60 ppm tétrahydrofurfuryl éthyle éther. Du n-butyllithium (n-BuLi) est introduit en quantité suffisante afin de neutraliser les impuretés protiques apportées par les différents constituants présents dans l'entrée de ligne. À l'entrée du réacteur, 850 $\mu$mol de n-BuLi pour 100 g de monomères sont introduits.

Les différents débits sont calculés afin que le temps de séjour moyen dans le réacteur soit de 40 min. La température est maintenue à 90 °C.

Le taux de conversion, mesuré sur un prélèvement réalisé en sortie de réacteur, est de 92,6 %.

En sortie de réacteur de polymérisation, du 3-(N,N-diméthylaminopropyl)triméthoxysilane en solution dans le méthylcyclohexane est ajouté à la solution de polymère vivant en différentes quantités (différents rapports molaires 3-(N,N-diméthylaminopropyl)triméthoxysilane / PLi) pour caractériser le procédé de fonctionnalisation. Cette solution est mélangée dans un mélangeur statique constitué de 36 éléments de mélangeage de type Kenics KMR puis traverse un tube vide, le temps de séjour total en tube étant de 3 minutes (mélangeur statique + tube vide), et un réacteur agité continu de 32,5 L, supposé parfaitement agité selon l'homme de l'art, de 40 minutes de temps de séjour. Les polymères sont ensuite soumis à un traitement anti-oxydant avec ajout de 0,4 pce de 2,2'-méthylène-bis(4-méthyl-6-tertiobutylphénol) et 0,2 pce de N-(1,3-diméthylbutyl)-N'-phényl-p-phénylènediamine.

Les polymères ainsi traités sont séparés de leur solution par une opération de stripping à la vapeur d'eau, puis séchés sur un outil à cylindres à 100 °C.

Les sauts de viscosité inhérente (SV) mesurés sont présentés sur la Figure 5.

Le modèle cinétique de fonctionnalisation décrit ci-dessus est intégré, selon l'homme d'art, à un modèle de réacteur tubulaire (représentatif du mélangeur statique Kenics) suivi d'un réacteur parfaitement agité continu (représentatif du réacteur agité de fonctionnalisation) (bibliographie : Villermeaux, J; Génie de la réaction chimique; 1993) et permet de déterminer la répartition d'espèces PLi, P, PA, $P_2A$ et $P_3A$.

Pour faire le lien entre la répartition des espèces PLi, P, PA, $P_2A$ et $P_3A$ calculée par le modèle cinétique de fonctionnalisation et le rapport expérimental de viscosités inhérentes avant et après fonctionnalisation (SV), le SV est calculé de manière théorique par l'équation ci-dessous :

$$SV = \left( \frac{\sum_{i=1}^{n} w_{PiA} \bar{M}_{w,P_iA}^{a} \, g_i'}{\bar{M}_{w,P}^{a}} \right)$$

Où,

$wP_iA$ est la fraction massique des espèces $P_iA$, PLi, P ;

Mw est la masse moléculaire moyenne en poids ;

a est le paramètre de l'équation MHS (Mark Houwink Sakurada) et égal à 0,75

$g_i$' est une correction pour les polymères étoilés, par exemple :

$$g_i' = \left( \frac{3i - 2}{i^2} \right)^b$$

Où,

b est égal à 0,58 (bibliographie : Structure and Rheology of Molten Polymers)

En supposant que le temps de séjour est assez long pour être considéré comme infini, on estime le rapport de constantes cinétiques K par minimisation des écarts de SV expérimental et calculé. La valeur de K est de $10^{1\pm1}$ comme représenté sur la Figure 5.

Le SV calculé est déterminé à partir de la répartition d'espèces calculée par le modèle cinétique intégré aux modèles de réacteurs tubulaire et parfaitement agité continu (Figure 6).

## II- ESSAIS

### II-1. Préparation des élastomères

**Préparation du polymère 1: Polymère fonctionnalisé par le 3-(N,N-diméthylaminopropyl)triméthoxysilane en milieu de chaîne selon l'invention**

Dans un réacteur agité continu de 32,5 L, supposé parfaitement agité selon l'homme de l'art, sont introduits en continu du méthylcyclohexane, du butadiène, du styrène et du tétrahydrofurfuryl éthyle éther, selon les proportions suivantes : débit massique butadiène = 2,85 kg.$h^{-1}$, débit massique styrène = 1,25 kg.$h^{-1}$, concentration massique en monomère = 11 wt.%, 60 ppm tétrahydrofurfuryl éthyle éther. Du n-butyllithium (n-BuLi) est introduit en entrée de ligne en quantité suffisante afin de neutraliser les impuretés protiques apportées par les différents constituants présents dans l'entrée de ligne. À l'entrée du réacteur, 850 $\mu$mol de n-BuLi pour 100 g de monomères sont introduits.

Les différents débits sont calculés afin que le temps de séjour moyen dans le réacteur soit de 40 min. La température est maintenue à 90 °C.

Le taux de conversion, mesuré sur un prélèvement réalisé en sortie de réacteur, est de 92,6 % et la viscosité inhérente est de 1,68 dL.$g^{-1}$.

En sortie de réacteur, 386 micromoles pour 100 g de monomères de 3-(N,N-diméthylaminopropyl)triméthoxysilane en solution dans le méthylcyclohexane sont ajoutées à la solution de polymère vivant. Cette solution est mélangée dans un mélangeur statique constitué de 36 éléments de mélangeage de type Kenics KMR puis traverse un tube vide, le temps de séjour total en tube étant de 3 minutes (mélangeur statique + tube vide), et dans un réacteur agité continu de 32,5 L, supposé parfaitement agité selon l'homme de l'art, de 40 minutes de temps de séjour. Le polymère est ensuite soumis à un traitement anti-oxydant avec ajout de 0,4 pce de 2,2'-méthylène-bis(4-méthyl-6-tertiobutylphénol) et 0,2 pce de N-(1,3-diméthylbutyl)-N'-phényl-p-phénylènediamine.

Le polymère ainsi traité est séparé de sa solution par une opération de stripping à la vapeur d'eau, puis séché sur un outil à cylindres à 100 °C, pour obtenir le polymère 1 fonctionnalisé par le 3-(N,N-diméthylaminopropyl)triméthoxysilane en milieu de chaîne selon l'invention.

La viscosité inhérente de ce polymère 1 est de 2,15 dL.$g^{-1}$, le saut de viscosité est de 1,28 et la viscosité $ML_{(1+4)}$100°C est de 72,0. La masse molaire moyenne en nombre Mn du polymère, déterminée par la technique SEC conventionnelle, est de 145 000 g.$mol^{-1}$ et l'indice de polymolécularité Ip est de 1,72. Le cold flow $CF_{(1+6)}$100°C de cet élastomère est de 0,452.

La microstructure de ce polymère est déterminée par la méthode NIR : le taux massique de motifs 1,2 est de 24,1 %, ce taux se rapportant aux unités butadiène. Le taux massique de styrène est de 26,5 %.

**Préparation du polymère 2 : Polymère fonctionnalisé par le 3-(N,N-diméthylaminopropyl)triméthoxysilane en milieu de chaîne selon l'invention**

Dans un réacteur agité continu de 32,5 L, supposé parfaitement agité selon l'homme de l'art, sont introduits en continu du méthylcyclohexane, du butadiène, du styrène et du tétrahydrofurfuryl éthyle éther, selon les proportions suivantes : débit massique butadiène = 2,85 kg.$h^{-1}$, débit massique styrène = 1,25 kg.$h^{-1}$, concentration massique en monomère = 11 wt.%, 60 ppm tétrahydrofurfuryl éthyle éther. Du n-butyllithium (n-BuLi) est introduit en entrée de ligne en quantité suffisante afin de neutraliser les impuretés protiques apportées par les différents constituants présents dans

l'entrée de ligne. À l'entrée du réacteur, 845 μmol de n-BuLi pour 100 g de monomères sont introduits.

Les différents débits sont calculés afin que le temps de séjour moyen dans le réacteur soit de 40 min. La température est maintenue à 90 °C.

Le taux de conversion, mesuré sur un prélèvement réalisé en sortie de réacteur, est de 92,7 % et la viscosité inhérente est de 1,66 $dL.g^{-1}$.

En sortie de réacteur, 396 micromoles pour 100 g de monomères de 3-(N,N-diméthylaminopropyl)triméthoxysilane en solution dans le méthylcyclohexane sont ajoutées à la solution de polymère vivant. Cette solution est mélangée dans un mélangeur statique constitué de 36 éléments de mélangeage de type Kenics KMR puis traverse un tube vide, le temps de séjour total en tube étant de 3 minutes (mélangeur statique + tube vide). Le polymère est ensuite soumis à un traitement anti-oxydant avec ajout de 0,4 pce de 2,2'-méthylène-bis(4-méthyl-6-tertiobutylphénol) et 0,2 pce de N-(1,3-diméthylbutyl)-N'-phényl-p-phénylènediamine.

Le polymère ainsi traité est séparé de sa solution par une opération de stripping à la vapeur d'eau, puis séché sur un outil à cylindres à 100 °C, pour obtenir le polymère **2** fonctionnalisé par le 3-(N,N-diméthylaminopropyl)triméthoxysilane en milieu de chaîne selon l'invention.

La viscosité inhérente de ce polymère **2** est de 2,12 $dL.g^{-1}$, le saut de viscosité est de 1,28 et la viscosité $ML_{(1+4)}$100°C est de 70,4. La masse molaire moyenne en nombre Mn du polymère, déterminée par la technique SEC conventionnelle, est de 142 000 $g.mol^{-1}$, la masse molaire et l'indice de polymolécularité Ip est de 1,73. Le cold flow $CF_{(1+6)}$100°C de cet élastomère est de 0,614.

La microstructure de ce polymère est déterminée par la méthode NIR : le taux massique de motifs 1,2 est de 23,6 %, ce taux se rapportant aux unités butadiène. Le taux massique de styrène est de 26,6 %.

**Préparation du polymère 3 : Polymère fonctionnalisé par le 3-(N,N-diméthylaminopropyl)triméthoxysilane en milieu de chaîne**

Dans un réacteur agité continu de 32,5 L, supposé parfaitement agité selon l'homme de l'art, sont introduits en continu du méthylcyclohexane, du butadiène, du styrène et du tétrahydrofurfuryl éthyle éther, selon les proportions suivantes : débit massique butadiène = 2,85 $kg.h^{-1}$, débit massique styrène = 1,25 $kg.h^{-1}$, concentration massique en monomère = 11 wt.%, 60 ppm tétrahydrofurfuryl éthyle éther. Du n-butyllithium (n-BuLi) est introduit en entrée de ligne en quantité suffisante afin de neutraliser les impuretés protiques apportées par les différents constituants présents dans l'entrée de ligne. À l'entrée du réacteur, 840 μmol de n-BuLi pour 100 g de monomères sont introduits.

Les différents débits sont calculés afin que le temps de séjour moyen dans le réacteur soit de 40 min. La température est maintenue à 90 °C.

Le taux de conversion, mesuré sur un prélèvement réalisé en sortie de réacteur, est de 93,5 % et la viscosité inhérente est de 1,66 $dL.g^{-1}$.

Cette solution de polymère vivant est introduite en continu dans un second réacteur agité continu de 32,5 L, supposé parfaitement agité selon l'homme de l'art, de 40 minutes de temps de séjour dans lequel 393 micromoles pour 100 g de monomères de 3-(N,N-diméthylaminopropyl)triméthoxysilane en solution dans le méthylcyclohexane sont introduites en continu. Le polymère est ensuite soumis à un traitement anti-oxydant avec ajout de 0,4 pce de 2,2'-méthylène-bis(4-méthyl-6-tertiobutylphénol) et 0,2 pce de N-(1,3-diméthylbutyl)-N'-phényl-p-phénylènediamine.

Le polymère ainsi traité est séparé de sa solution par une opération de stripping à la vapeur d'eau, puis séché sur un outil à cylindres à 100 °C, pour obtenir le polymère 3 fonctionnalisé par le 3-(N,N-diméthylaminopropyl)triméthoxysilane en milieu de chaîne.

La viscosité inhérente de ce polymère **3** est de 2,14 $dL.g^{-1}$, le saut de viscosité est de 1,29 et la viscosité $ML_{(1+4)}$100°C est de 76,4. La masse molaire moyenne en nombre Mn du polymère, déterminée par la technique SEC conventionnelle, est de 144 000 $g.mol^{-1}$ et l'indice de polymolécularité Ip est de 1,80. Le cold flow $CF_{(1+6)}$100°C de cet élastomère est de 0,216.

La microstructure de ce polymère est déterminée par la méthode NIR : le taux massique de motifs 1,2 est de 24,4 %, ce taux se rapportant aux unités butadiène. Le taux massique de styrène est de 27,0 %.

Les caractéristiques des différents élastomères sont reportées dans le Tableau 3:

**Tableau 3:**

| | Exemples | | Exemple comparatif |
|---|---|---|---|
| | **1** | **2** | **3** |
| $ML_{(1+4)}$ 100°C | 72,0 | 70,4 | 76,4 |
| $CF_{(1+6)}$ 100°C | 0,452 | 0,614 | 0,216 |
| Saut de viscosité ($dL.g^{-1}$) | 1,28 | 1,28 | 1,29 |

(suite)

| | Exemples | | Exemple comparatif |
|---|---|---|---|
| | **1** | **2** | **3** |
| Chaînes non fonctionnelles (%) * | 8,0 | 8,0 | 8,0 |
| Chaînes vivantes non fonctionnalisées (%) * | 0,0 | 5,4 | 0,0 |
| Chaînes fonctionnalisées en extrémité de chaîne (%) * | 5,4 | 9,0 | 8,9 |
| Chaînes fonctionnalisées en milieu de chaîne (%) * | 70,5 | 66,8 | 51,3 |
| Chaînes étoilées (%) * | 16,1 | 10,8 | 31,8 |

* Estimation théorique des répartitions de chaîne (en faisant l'hypothèse du mécanisme réactionnel (plus haut), du modèle cinétique (plus haut) et K=10)

**II-2. Préparation des compositions**

On procède pour les essais qui suivent de la manière suivante: on introduit dans un mélangeur interne Polylab de 85cm$^3$, rempli à 70% et dont la température initiale de cuve est d'environ 110°C, les élastomères diéniques modifiés synthétisés précédemment. Ensuite, les charges renforçantes, l'agent de couplage puis, après une à deux minutes de malaxage, les divers autres ingrédients à l'exception du système de vulcanisation, sont introduits dans le mélangeur. On conduit alors un travail thermomécanique (phase non-productive) en une étape (durée totale du malaxage égale à environ 5 min), jusqu'à atteindre une température maximale de "tombée" de 160°C. On récupère le mélange ainsi obtenu, on le refroidit puis on ajoute le système de vulcanisation (soufre) sur un mélangeur externe (homo-finisseur) à 25°C, en mélangeant le tout (phase productive) pendant environ 5 à 6 min.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques.

Les compositions de caoutchouc sont données dans le Tableau 4 Les quantités sont exprimées en parties pour 100 parties en poids d'élastomère (pce).

**Tableau 4 :**

| | Exemples | | Exemple comparatif |
|---|---|---|---|
| Composition | **1** | **2** | **3** |
| Polymère **1** | 100 | | |
| Polymère **2** | | 100 | |
| Polymère **3** | | | 100 |
| Silice (1) | 80 | 80 | 80 |
| N234 | 1 | 1 | 1 |
| Huile MES (2) | 15 | 15 | 15 |
| Résine (3) | 15 | 15 | 15 |
| Agent de couplage (4) | 6,4 | 6,4 | 6,4 |
| ZnO | 2,5 | 2,5 | 2,5 |
| Acide stéarique | 2 | 2 | 2 |
| Anti-oxydant (5) | 1,9 | 1,9 | 1,9 |
| Cire anti-ozone "C32ST" (6) | 1,5 | 1,5 | 1,5 |
| Diphénylguanidine | 1,5 | 1,5 | 1,5 |
| Soufre | 1,2 | 1,2 | 1,2 |
| Sulfénamide (7) | 2 | 2 | 2 |

(1) Silice "Zeosil 1165MP " de Rhodia.
(2) Catenex® SBR de Shell.
(3) Résine Dercolyte L120 de DRT.
(4) "Si69" de Degussa.
(5) N-(1,3-dimethylbutyl)-N'-phenyl-p-phenylenediamine.
(6) Anti-ozone de Repsol.
(7) N-cyclohexyl-2-benzothiazylsulphenamide.

Les résultats de mesures des propriétés dynamiques sont exprimés dans le Tableau 5 qui suit:

**Tableau 5 :**

| | Exemples | | Exemple comparatif |
|---|---|---|---|
| Compositions | **1** | **2** | **3** |
| tan $\delta$ max 23°C | 0,197 | 0,203 | 0,217 |

On constate que les élastomères 1 et 2 présentent des valeurs de Cold Flow considérées comme suffisamment faibles pour limiter les problèmes de fluage, tout en minimisant en composition de caoutchouc renforcée la valeur de tan $\delta$, exprimant une hystérèse réduite. A l'inverse, l'élastomère 3 présente une valeur de Cold Flow encore réduite, mais au détriment de l'hystérèse de la composition de caoutchouc renforcée le contenant. Le compromis fluage à froid des élastomères - hystérèse de la composition de caoutchouc les contenant est optimisé et tout à fait satisfaisant pour les élastomères 1 et 2 selon l'invention.

## Revendications

**1.** Procédé de synthèse en continu d'un élastomère diénique modifié, **caractérisé en ce qu'**il comprend les étapes :

- de polymérisation anionique d'au moins un monomère diène conjugué en présence d'un initiateur de polymérisation,
- de modification de l'élastomère diénique dans un dispositif de fonctionnalisation, par mise en contact en une étape de l'élastomère diénique vivant porteur d'un site actif obtenu à l'étape précédente avec un agent de fonctionnalisation non polymérisable comprenant (a) le cas échéant, une fonction susceptible d'interagir avec une charge renforçante et (b) un groupement trialcoxysilane, le radical alcoxy, hydrolysable ou non, ayant 1 à 10 atomes de carbone,

➢ la modification comprenant trois réactions en série

| Réaction | Mécanisme |
|---|---|
| R1 | $PLi + A \xrightarrow{k_1} PA$ |
| R2 | $PLi + PA \xrightarrow{k_2} P_2A$ |
| R3 | $PLi + P_2A \xrightarrow{k_3} P_3A$ |

où

- A représente l'agent de fonctionnalisation,
- PLi représente une chaîne élastomère vivante,
- PA représente l'élastomère fonctionnalisé en bout de chaîne,
- $P_2A$ représente l'élastomère couplé,
- $P_3A$ représente l'élastomère étoilé à trois branches, et
- $k_i$ représente la constante cinétique de la réaction $R_i$,

s'effectuant selon la loi de vitesse suivante :

| Réactions | Vitesse de réaction |
|---|---|
| R1 | $V_1 = k_1[PLi][A]$ |
| R2 | $V_2 = k_2[PLi][PA]$ |
| R3 | $V_3 = k_3 [PLi][P_2A]$ |

où

- $k_1$, $k_2$ et $k_3$ sont les constantes cinétiques respectivement des réactions R1, R2 et R3 (exprimées en $(m^3/mol).s^{-1}$),
- [PLi] est la concentration de chaînes vivantes (exprimée en $mol/m^3$),
- [A] est la concentration en agent de modification A (exprimée en $mol/m^3$),
- [PA] est la concentration en élastomère fonctionnalisé en bout de chaîne (exprimée en $mol/m^3$),
- [$P_2A$] est la concentration en élastomère couplé (exprimée en $mol/m^3$),
- [$P_3A$] est la concentration en élastomère étoilé à trois branches (exprimée en $mol/m^3$),

avec un rapport des constantes cinétiques, défini comme: $K = \frac{k_1}{k_2} = \frac{k_2}{k_3}$, supérieur à 1, et

➢ la distribution de temps de séjour dans un dispositif de fonctionnalisation (i) ou (ii) s'exprime respectivement selon les équations 1 ou 3 suivantes :

(i) dans un dispositif de fonctionnalisation à au moins un réacteur continu tubulaire ou à au moins une cascade d'au moins deux réacteurs agités,

$$E_1(t) = \frac{1}{2}\left(\frac{P}{\pi\,\theta_1\,t}\right)^{\frac{1}{2}} e^{-\frac{P(\theta_1 - t)^2}{4\,\theta_1\,t}} \qquad \text{Eq 1}$$

dans laquelle :

• $P$ est le paramètre adimensionnel de résistance à la dispersion,
• $\theta_1$ est le temps de séjour défini comme le ratio volume de réacteur/débit volumique totale, égal de préférence à au moins 0,1 minute et au plus à 10 minutes, plus préférentiellement au plus à 5 minutes,
• $t$ est la variable temps de la distribution de temps de séjour,

(ii) dans un dispositif de fonctionnalisation qui est une combinaison du dispositif (i) et d'un dispositif à au moins un réacteur continu agité, présentant une distribution de temps de séjour **caractérisée par** l'équation suivante :

$$E_2(t) = \frac{e^{\left(-\frac{t}{\theta_2}\right)}}{\theta_2} \qquad \text{Eq 2}$$

dans laquelle :

• $\theta_2$ est le temps de séjour défini comme le ratio de volume de réacteur/débit volumique totale, compris de préférence entre 0 et 60 minutes, plus préférentiellement entre 5 et 50 minutes,
• $t$ est la variable temps de la distribution de temps de séjour,

le dispositif (ii) présentant une distribution de temps de séjour **caractérisée par** l'équation 3 suivante, qui est le résultat de la convolution des équations 1 et 2 :

$$E_{12}(t) = \int_0^t E_1(t-T)\,E_2(T)\,dT \qquad \text{Eq 3}$$

$$E_{12}(t) = \int_0^t \frac{1}{2}\left(\frac{P}{\pi\,\theta_1\,(t-T)}\right)^{\frac{1}{2}} e^{-\frac{P(\theta_1-(t-T))^2}{4\,\theta_1\,(t-T)}} \frac{e^{\left(-\frac{T}{\theta_2}\right)}}{\theta_2}\,dT$$

dans laquelle :

- $\theta_1$ *et* $\theta_2$ sont les temps de séjours tels que définis plus haut,
- *P* est le paramètre adimensionnel de résistance à la dispersion,
- *t* est la variable temps de la distribution de temps de séjour,
- *T* est la variable d'intégration.

**2.** Procédé de synthèse en continu d'un élastomère diénique modifié selon la revendication 1, **caractérisé en ce que** K est supérieur ou égal à 10.

**3.** Procédé de synthèse en continu d'un élastomère diénique modifié selon la revendication 1 ou 2, **caractérisé en ce que** P est supérieur à 6,9, plus préférentiellement supérieur ou égale à 9,6.

**4.** Procédé de synthèse en continu d'un élastomère diénique modifié selon l'une quelconque des revendications 1 à 3, **caractérisé en ce que** l'agent de fonctionnalisation est représenté par la formule 1:

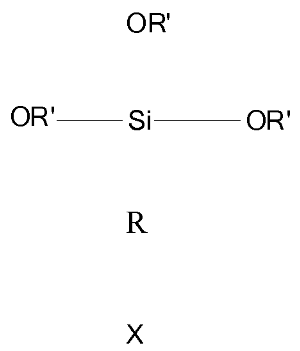

Formule 1

dans laquelle,

- R est un radical hydrocarboné divalent aliphatique, saturé ou non, cyclique ou non, en $C_1$-$C_{18}$, aromatique en $C_6$-$C_{18}$, de préférence un radical hydrocarboné divalent, linéaire ou ramifié, aliphatique en $C_1$-$C_{10}$, plus préférentiellement un radical hydrocarboné divalent linéaire aliphatique en $C_1$-$C_6$, plus préférentiellement encore le radical hydrocarboné linéaire en $C_3$.
- X est un atome d'hydrogène ou une fonction susceptible d'interagir avec une charge renforçante,
- les radicaux R', substitués ou non substitués, identiques ou différents, représentent un groupe alkyle en $C_1$-$C_{10}$, voire en $C_1$-$C_8$, de préférence un groupe alkyle en $C_1$-$C_4$, plus préférentiellement méthyle et éthyle.

**5.** Procédé de synthèse en continu d'un élastomère diénique modifié selon la revendication 4, **caractérisé en ce que** X est une fonction susceptible d'interagir avec une charge renforçante choisie parmi les amines primaires, secondaires ou tertiaires, cycliques ou non, les isocyanates, les imines, les cyano, les thiols, les carboxylates, les époxydes, les phosphines primaires, secondaires ou tertiaires.

**6.** Procédé de synthèse en continu d'un élastomère diénique modifié selon la revendication 5, **caractérisé en ce que** la fonction susceptible d'interagir avec une charge renforçante est une amine secondaire protégée ou non par un groupement trialkylsilyle ou une amine tertiaire, l'atome d'azote étant substitué par des radicaux alkyle en $C_1$-$C_{10}$, de préférence alkyle en $C_1$-$C_4$, plus préférentiellement un radical méthyle ou éthyle, ou alors une amine cyclique formant un hétérocycle contenant un atome d'azote et au moins un atome de carbone, de préférence de 2 à 6 atomes de carbone.

**7.** Procédé de synthèse en continu d'un élastomère diénique modifié selon la revendication 6, **caractérisé en ce que** l'agent de fonctionnalisation est choisi parmi le 3-(N,N-diméthylaminopropyl)triméthoxysilane, le 3-(N,N-diméthylaminopropyl)triéthoxysilane , le 3-(N,N-diéthylaminopropyl)triméthoxysilane, le 3-(N,N-diéthylaminopropyl)triéthoxysilane, le 3-(N,N-dipropylaminopropyl)triméthoxysilane, le 3-(N,N-dipropylaminopropyl)triéthoxysilane, le 3-(N,N-dibutylaminopropyl)triméthoxysilane, le 3-(N,N-dibutylaminopropyl)triéthoxysilane, le 3-(N,N-dipentylaminopropyl)triméthoxysilane, le 3-(N,N-dipentylaminopropyl)triéthoxysilane, le 3-(N,N-dihexylaminopropyl)triméthoxysilane, le 3-(N,N-dihexylaminopropyl)triéthoxysilane, le 3-(hexaméthylèneaminopropyl)triméthoxysilane, le 3-(hexaméthylèneaminopropyl)triéthoxysilane.

**8.** Procédé de synthèse en continu d'un élastomère diénique modifié selon l'une quelconque des revendications 1 à 6, **caractérisé en ce qu'**il comprend ultérieurement à l'étape de modification, une étape de déprotection lorsque la fonction susceptible d'interagir avec la charge renforçante est une fonction amine primaire ou secondaire protégée, thiol protégée ou phosphine primaire ou secondaire protégée.

**9.** Procédé de synthèse en continu d'un élastomère diénique modifié selon l'une quelconque des revendications précédentes, **caractérisé en ce qu'**il comprend ultérieurement à l'étape de modification, une étape d'hydrolyse de l'élastomère modifié obtenu à l'étape précédente.

**10.** Procédé de synthèse en continu d'un élastomère diénique modifié selon l'une quelconque des revendications précédentes, **caractérisé en ce que** le rapport molaire de l'agent de fonctionnalisation à l'initiateur de polymérisation a une valeur allant de 0,40 et 0,75.

**11.** Procédé de synthèse en continu d'un élastomère diénique modifié selon l'une quelconque des revendications 1 à 9, **caractérisé en ce que** le rapport molaire de l'agent de fonctionnalisation à l'initiateur de polymérisation a une valeur allant de 0,15 et 0,40.

**12.** Procédé de synthèse en continu d'un élastomère diénique modifié selon l'une quelconque des revendications 1 à 9, **caractérisé en ce que** le rapport molaire de l'agent de fonctionnalisation à l'initiateur de polymérisation a une valeur supérieure ou égale à 0,75.

**13.** Elastomère diénique modifié **caractérisé en ce qu'**il est obtenu selon le procédé de synthèse en continu tel que décrit dans l'une quelconque des revendications précédentes.

**14.** Installation de synthèse en continu d'un élastomère diénique modifié **caractérisée en ce qu'**elle comprend

- un dispositif de polymérisation constitué d'au moins un réacteur de polymérisation équipé d'un dispositif d'alimentation en continu en monomères et en initiateur de polymérisation anionique, ainsi que d'une sortie pour évacuer l'élastomère diénique vivant, et
- un dispositif de modification de l'élastomère diénique vivant issu de l'étape de polymérisation anionique, équipé d'un dispositif d'alimentation en continu en élastomère diénique vivant issu du dispositif de polymérisation et d'un dispositif d'alimentation en agent de fonctionnalisation, ainsi que d'une sortie pour évacuer l'élastomère diénique modifié, ayant pour modèle l'un des modèles suivants:

1. un réacteur tubulaire avec dispersion axiale,
2. un réacteur tubulaire avec dispersion axiale en série avec au moins un réacteur continu agité, supposé parfaitement agité,
3. au moins un réacteur tubulaire avec dispersion axiale, en série avec un réacteur continu agité, supposé parfaitement agité,
4. plusieurs réacteurs tubulaires avec dispersion axiale en série avec plusieurs réacteurs continus agités, supposés parfaitement agités,
5. au moins deux réacteurs continus agités, supposés parfaitement agités, en série.

**15.** Utilisation d'une installation selon la revendication 14 pour la mise en œuvre du procédé selon les revendications 1 à 12.

**16.** Unité de préparation en continu d'un élastomère diénique modifié, **caractérisée en ce qu'**elle intègre l'installation selon la revendication 14 et **en ce que** le dispositif de modification communique en aval avec un dispositif de récupération de l'élastomère diénique.

## Patentansprüche

**1.** Verfahren zur kontinuierlichen Synthese eines modifizierten Dienelastomers, **dadurch gekennzeichnet, dass** es folgende Schritte umfasst:

- anionische Polymerisation mindestens eines konjugierten Dienmonomers in Gegenwart eines Polymerisationsinitiators,
- Modifizierung des Dienelastomers in einer Funktionalisierungsvorrichtung durch Inkontaktbringen des im vorhergehenden Schritt erhaltenen lebenden Dienelastomers, das ein aktives Zentrum trägt, in einem Schritt mit einem nicht polymerisierbaren Funktionalisierungsmittel, das (a) gegebenenfalls eine Funktion, die mit einem verstärkenden Füllstoff wechselwirken kann, und (b) eine Trialkoxysilangruppe, wobei der gegebenenfalls hydrolysierbare Alkoxyrest 1 bis 10 Kohlenstoffatome aufweist, umfasst,

➢ wobei die Modifizierung drei Reaktionen in Serie umfasst:

| Reaktion | Mechanismus |
|---|---|
| R1 | $PLi + A \xrightarrow{k_1} PA$ |
| R2 | $PLi + PA \xrightarrow{k_2} P_2A$ |
| R3 | $PLi + P_2A \xrightarrow{k_3} P_3A$ |

wobei

- A für das Funktionalisierungsmittel steht,
- PLi für eine lebende Elastomerkette steht,
- PA für das am Kettenende funktionalisierte Elastomer steht,
- $P_2A$ für das gekoppelte Elastomer steht,
- $P_3A$ für das dreiarmige sternförmige Elastomer steht und
- $k_i$ für die Geschwindigkeitskonstante der Reaktion $R_i$ steht,

die gemäß dem folgenden Geschwindigkeitsgesetz ablaufen:

| Reaktionen | Reaktionsgeschwindigkeit |
|---|---|
| R1 | $V_1 = k_1[PL_i][A]$ |
| R2 | $V_2 = k_2[PLi][PA]$ |
| R3 | $V_3 = k_3[PLi][P_2A]$ |

wobei

- $k_1$, $k_2$ und $k_3$ die Geschwindigkeitskonstanten der Reaktionen R1, R2 bzw. R3 (ausgedrückt in $(m^3/mol)\cdot s^{-1}$) sind,
- [PLi] die Konzentration der lebenden Ketten (ausgedrückt in $mol/m^3$) ist,
- [A] die Konzentration von Modifizierungsmittel A (ausgedrückt in $mol/m^3$) ist,
- [PA] die Konzentration von am Kettenende funktionalisiertem Elastomer (ausgedrückt in $mol/m^3$) ist,
- $[P_2A]$ die Konzentration von gekoppeltem Elastomer(ausgedrückt in $mol/m^3$) ist,
- $[P_3A]$ die Konzentration von dreiarmigem sternförmigen Elastomer (ausgedrückt in $mol/m^3$) ist,

wobei das als $K = \frac{k_1}{k_2} = \frac{k_2}{k_3}$ definierte Verhältnis der Geschwindigkeitskonstanten >1 ist und

➢ die Verweilzeitverteilung in einer Funktionalisierungsvorrichtung (i) oder (ii) gemäß den folgenden Gleichungen 1 bzw. 3 ausgedrückt wird:

(i) in einer Funktionalisierungsvorrichtung mit mindestens einem kontinuierlichen Rohrreaktor oder mit mindestens einer Kaskade von mindestens 2 Rührreaktoren,

$$E_1(t) = \frac{1}{2}\left(\frac{P}{\pi\,\theta_1\,t}\right)^{\frac{1}{2}} e^{-\frac{P(\theta_1-t)^2}{4\,\theta_1\,t}} \qquad \text{Gl. 1}$$

worin:

- *P* der dimensionslose Parameter des Dispergierwiderstands ist,
- $\theta_1$ die als Verhältnis von Reaktorvolumen und gesamtem Volumenstrom definierte Verweilzeit ist, die vorzugsweise mindestens 0,1 Minute und höchstens 10 Minuten, weiter bevorzugt höchstens 5 Minuten, beträgt,
- *t* für die Zeitvariable der Verweilzeitverteilung steht,

(ii) in einer Funktionalisierungsvorrichtung, bei der es sich um eine Kombination der Vorrichtung (i) und einer Vorrichtung mit mindestens einem kontinuierlich arbeitenden Rührreaktor handelt, mit einer Verweilzeit verteilen, die durch die folgende Gleichung gekennzeichnet ist:

$$E_2(t) = \frac{e^{\left(-\frac{t}{\theta_2}\right)}}{\theta_2} \qquad \text{Gl. 2}$$

worin:

- $\theta_2$ die als Verhältnis von Reaktorvolumen und gesamtem Volumenstrom definierte Verweilzeit ist, die vorzugsweise zwischen 0 und 60 Minuten, weiter bevorzugt zwischen 5 und 50 Minuten liegt,
- *t* für die Zeitvariable der Verweilzeitverteilung steht,

wobei die Vorrichtung (ii) eine durch die folgende Gleichung 3 gekennzeichnete Verweilzeitverteilung aufweist, bei der es sich um das Ergebnis der Konvolution der Gleichungen 1 und 2 handelt:

$$E_{12}(t) = \int_0^t E_1(t-T)\,E_2(T)dT \qquad \text{Gl. 3}$$

$$E_{12}(t) = \int_0^t \frac{1}{2}\left(\frac{P}{\pi\,\theta_1\,(t-T)}\right)^{\frac{1}{2}} e^{-\frac{P(\theta_1-(t-T))^2}{4\,\theta_1\,(t-T)}} \frac{e^{\left(-\frac{T}{\theta_2}\right)}}{\theta_2}\,dT$$

worin:

- $\theta_1$ und $\theta_2$ die weiter oben definierten Verweilzeiten sind,
- *P* der dimensionslose Parameter des Dispergierwiderstands ist,
- *t* für die Zeitvariable der Verweilzeitverteilung steht,
- iT für die Integrationsvariable steht.

**2.** Verfahren zur kontinuierlichen Synthese eines modifizierten Dienelastomers nach Anspruch 1, **dadurch gekennzeichnet, dass** K größer oder gleich 10 ist.

**3.** Verfahren zur kontinuierlichen Synthese eines modifizierten Dienelastomers nach Anspruch 1 oder 2, **dadurch gekennzeichnet, dass** P größer als 6,9, weiter bevorzugt größer oder gleich 9,6, ist.

**4.** Verfahren zur kontinuierlichen Synthese eines modifizierten Dienelastomers nach einem der Ansprüche 1 bis 3, **dadurch gekennzeichnet, dass** das Funktionalisierungsmittel durch die Formel 1 wiedergegeben wird:

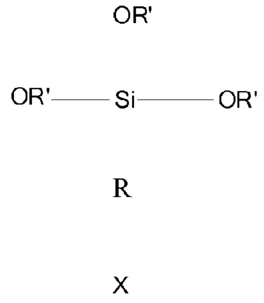

Formel 1

worin

- R für einen cyclischen oder acyclischen, gesättigten oder ungesättigten, zweiwertigen aliphatischen $C_1$-$C_{18}$-Kohlenwasserstoffrest oder aromatischen $C_6$-$C_{18}$-Kohlenwasserstoffrest, vorzugsweise einen aliphatischen, linearen oder verzweigten zweiwertigen $C_1$-$C_{10}$-Kohlenwasserstoffrest, weiter bevorzugt einen aliphatischen linearen zweiwertigen $C_1$-$C_6$-Kohlenwasserstoffrest, noch weiter bevorzugt den linearen $C_3$-Kohlenwasserstoffrest, steht,
- X für ein Wasserstoffatom oder eine Funktion, die mit einem verstärkenden Füllstoff wechselwirken kann, steht,
- die Reste R', die substituiert oder unsubstituiert und gleich oder verschieden sind, für eine $C_1$-$C_{10}$- oder sogar $C_1$-$C_8$- und vorzugsweise eine $C_1$-$C_4$-Alkylgruppe, weiter bevorzugt Methyl und Ethyl, stehen.

**5.** Verfahren zur kontinuierlichen Synthese eines modifizierten Dienelastomers nach Anspruch 4, **dadurch gekennzeichnet, dass** X für eine Funktion, die mit einem verstärkenden Füllstoff wechselwirken kann, steht, die aus cyclischen oder acyclischen, primären, sekundären oder tertiären Aminen, Isocyanaten, Iminen, Cyanogruppen, Thiolen, Carboxylaten, Epoxiden und primären, sekundären oder tertiären Phosphinen ausgewählt ist.

**6.** Verfahren zur kontinuierlichen Synthese eines modifizierten Dienelastomers nach Anspruch 5, **dadurch gekennzeichnet, dass** es sich bei der Funktion, die mit einem verstärkenden Füllstoff wechselwirken kann, um ein sekundäres Amin, das gegebenenfalls durch eine Trialkylsilylgruppe geschützt ist, oder ein tertiäres Amin, wobei das Stickstoffatom durch $C_1$-$C_{10}$-Alkylreste, vorzugsweise $C_1$-$C_4$-Alkylreste, weiter bevorzugt einen Methyl- oder Ethylrest, substituiert ist, oder auch ein cyclisches Amin, das einen Heterocyclus bildet, der ein Stickstoffatom und mindestens ein Kohlenstoffatom, vorzugsweise 2 bis 6 Kohlenstoffatome, enthält, handelt.

**7.** Verfahren zur kontinuierlichen Synthese eines modifizierten Dienelastomers nach Anspruch 6, **dadurch gekennzeichnet, dass** das Funktionalisierungsmittel aus 3-(N,N-Dimethylaminopropyl)-trimethoxysilan, 3-(N,N-Dimethylaminopropyl)-triethoxysilan, 3-(N,N-Diethylaminopropyl)-trimethoxysilan, 3-(N,N-Diethylaminopropyl)-triethoxysilan, 3-(N,N-Dipropylaminopropyl)-trimethoxysilan, 3-(N,N-Dipropylaminopropyl)-triethoxysilan, 3-(N,N-Dibutylaminopropyl)-trimethoxysilan, 3-(N,N-Dibutylaminopropyl)-triethoxysilan, 3-(N,N-Dipentylaminopropyl)-trimethoxysilan, 3-(N,N-Dipentylaminopropyl)-triethoxysilan, 3-(N,N-Dihexylaminopropyl)-trimethoxysilan, 3-(N,N-Dihexylaminopropyl)-triethoxysilan, 3-(Hexamethylenaminopropyl)-trimethoxysilan und 3-(Hexamethylenaminopropyl)-triethoxysilan ausgewählt ist.

**8.** Verfahren zur kontinuierlichen Synthese eines modifizierten Dienelastomers nach einem der Ansprüche 1 bis 6, **dadurch gekennzeichnet, dass** es nach dem Modifizierungsschritt einen Entschützungsschritt umfasst, wenn es sich bei der Funktion, die mit dem verstärkenden Füllstoff wechselwirken kann, um eine geschützte primäre oder sekundäre Aminfunktion, geschützte Thiolfunktion oder geschützte primäre oder sekundäre Phosphinfunktion handelt.

**9.** Verfahren zur kontinuierlichen Synthese eines modifizierten Dienelastomers nach einem der vorhergehenden Ansprüche, **dadurch gekennzeichnet, dass** es nach dem Modifizierungsschritt einen Schritt der Hydrolyse des im vorhergehenden Schritt erhaltenen modifizierten Elastomers umfasst.

**10.** Verfahren zur kontinuierlichen Synthese eines modifizierten Dienelastomers nach einem der vorhergehenden Ansprüche, **dadurch gekennzeichnet, dass** das Molverhältnis von Funktionalisierungsmittel zu Polymerisationsinitiator einen Wert im Bereich von 0,40 bis 0,75 aufweist.

**11.** Verfahren zur kontinuierlichen Synthese eines modifizierten Dienelastomers nach einem der Ansprüche 1 bis 9

**dadurch gekennzeichnet, dass** das Molverhältnis von Funktionalisierungsmittel zu Polymerisationsinitiator einen Wert im Bereich von 0,15 bis 0,40 aufweist.

**12.** Verfahren zur kontinuierlichen Synthese eines modifizierten Dienelastomers nach einem der Ansprüche 1 bis 9 **dadurch gekennzeichnet, dass** das Molverhältnis von Funktionalisierungsmittel zu Polymerisationsinitiator einen Wert größer oder gleich 0,75 aufweist.

**13.** Modifiziertes Dienelastomer, **dadurch gekennzeichnet, dass** es nach dem Verfahren zur kontinuierlichen Synthese gemäß einem der vorhergehenden Ansprüche erhalten wird.

**14.** Anlage zur kontinuierlichen Synthese eines modifizierten Dienelastomers, **dadurch gekennzeichnet, dass** es Folgendes umfasst:

- eine Polymerisationsvorrichtung aus mindestens einem Polymerisationsreaktor mit einer Vorrichtung zur kontinuierlichen Zuführung von Monomeren und anionischem Polymerisationsinitiator sowie einem Ausgang zum Austragen des lebenden Dienelastomers und
- eine Vorrichtung zur Modifizierung des lebenden Dienelastomers aus dem Schritt der anionischen Polymerisation mit einer Vorrichtung zur kontinuierlichen Zuführung von lebendem Dienelastomer aus der Polymerisationsvorrichtung und einer Vorrichtung zur Zuführung von Funktionalisierungsmittel sowie einem Ausgang zum Austragen des modifizierten Dienelastomers, mit einem der folgenden Modelle als Modell:

  1. einem Rohrreaktor mit axialer Dispergierung,
  2. einem Rohrreaktor mit axialer Dispergierung in Reihe mit mindestens einem kontinuierlich arbeitenden Rührreaktor, bei dem perfektes Rühren angenommen wird,
  3. mindestens einem Rohrreaktor mit axialer Dispergierung in Reihe mit einem kontinuierlich arbeitenden Rührreaktor, bei dem perfektes Rühren angenommen wird,
  4. mehreren Rohrreaktoren mit axialer Dispergierung in Reihe mit mehreren kontinuierlich arbeitenden Rührreaktoren, bei denen perfektes Rühren angenommen wird,
  5. mindestens zwei kontinuierlich arbeitende Rührreaktoren, bei denen perfektes Rühren angenommen wird, in Reihe.

**15.** Verwendung einer Anlage nach Anspruch 14 zur Durchführung des Verfahrens nach den Ansprüchen 1 bis 12.

**16.** Einheit zur kontinuierlichen Herstellung eines modifizierten Dienelastomers, **dadurch gekennzeichnet, dass** sie die Vorrichtung nach Anspruch 14 umfasst und dass die Modifizierungsvorrichtung stromabwärts mit einer Vorrichtung zur Gewinnung des Dienelastomers in Verbindung steht.

## Claims

**1.** Method for the continuous synthesis of a modified diene elastomer, **characterized in that** it comprises the steps:

- of anionic polymerization of at least one conjugated diene monomer in the presence of a polymerization initiator,
- of modifying the diene elastomer in a functionalizing device, by bringing the living diene elastomer bearing an active site obtained in the previous step into contact, in a single step, with a non-polymerizable functionalizing agent comprising (a) where appropriate, a function capable of interacting with a reinforcing filler and (b) a trialkoxysilane group, the optionally hydrolysable alkoxy radical having 1 to 10 carbon atoms,

  ➢ the modification comprising three reactions in series

| Reaction | Mechanism |
|---|---|
| R1 | $PLi + A \xrightarrow{k_1} PA$ |
| R2 | $PLi + PA \xrightarrow{k_2} P_2A$ |

(continued)

| Reaction | Mechanism |
|---|---|
| R3 | $PLi + P_2A \xrightarrow{k_3} P_3A$ |

where

- A represents the functionalizing agent,
- PLi represents a living elastomer chain,
- PA represents the chain-end functionalized elastomer,
- $P_2A$ represents the coupled elastomer,
- $P_3A$ represents the three-arm star-shaped elastomer, and
- $k_i$ represents the rate constant of the reaction $R_i$,

that are carried out according to the following rate law:

| Reactions | Rate of reaction |
|---|---|
| R1 | $V_1 = k_1[PLi][A]$ |
| R2 | $V_2 = k_2[PLi][PA]$ |
| R3 | $V_3 = k_3[PLi][P_2A]$ |

where

- $k_1$, $k_2$ and $k_3$ are the rate constants respectively of the reactions R1, R2 and R3 (expressed in $(m^3/mol).s^{-1}$),
- [PLi] is the concentration of living chains (expressed in $mol/m^3$),
- [A] is the concentration of modifying agent A (expressed in $mol/m^3$),
- [PA] is the concentration of chain-end functionalized elastomer (expressed in $mol/m^3$),
- $[P_2A]$ is the concentration of coupled elastomer (expressed in $mol/m^3$),
- $[P_3A]$ is the concentration of the three-arm star-shaped elastomer (expressed in $mol/m^3$),

with a ratio of the rate constants, defined as: $K = \frac{k_1}{k_2} = \frac{k_2}{k_3}$, of greater than 1, and

➢ the residence time distribution in a functionalizing device (i) or (ii) is expressed respectively according to equations 1 or 3 below:

(i) in a functionalizing device having at least one tubular continuous reactor or having at least one cascade of at least two stirred reactors,

$$E_1(t) = \frac{1}{2}\left(\frac{P}{\pi\,\theta_1\,t}\right)^{\frac{1}{2}} e^{-\frac{P(\theta_1 - t)^2}{4\,\theta_1\,t}} \qquad \text{Eq 1}$$

in which:

- *P* is the dimensionless parameter of resistance to dispersion,
- $\theta_1$ is the residence time defined as the reactor volume/total volume flow rate ratio, preferably equal to at least 0.1 minute and at most to 10 minutes, more preferably at most to 5 minutes,
- *t* is the variable time of the residence time distribution,

(ii) in a functionalizing device that is a combination of the device (i) and of a device having at least one continuous stirred reactor, having a residence time distribution **characterized by** the following equation:

$$E_2(t) = \frac{e^{\left(-\frac{t}{\theta_2}\right)}}{\theta_2} \qquad \text{Eq 2}$$

in which:

- $\theta_2$ is the residence time defined as the reactor volume/total volume flow rate ratio, preferably between 0 and 60 minutes, more preferably between 5 and 50 minutes,
- *t* is the variable time of the residence time distribution,

the device (ii) having a residence time distribution **characterized by** the equation 3 below, which is the result of the convolution of equations 1 and 2:

$$E_{12}(t) = \int_0^t E_1(t-T)\, E_2(T) dT \qquad \text{Eq 3}$$

$$E_{12}(t) = \int_0^t \frac{1}{2}\left(\frac{P}{\pi\,\theta_1\,(t-T)}\right)^{\frac{1}{2}} e^{-\frac{P(\theta_1-(t-T))^2}{4\,\theta_1\,(t-T)}}\, \frac{e^{\left(-\frac{T}{\theta_2}\right)}}{\theta_2}\, dT$$

in which:

- $\theta_1$ and $\theta_2$ are the residence times as defined above,
- *P* is the dimensionless parameter of resistance to dispersion,
- *t* is the variable time of the residence time distribution,
- *T* is the integration variable.

**2.** Method for the continuous synthesis of a modified diene elastomer according to Claim 1, **characterized in that** K is greater than or equal to 10.

**3.** Method for the continuous synthesis of a modified diene elastomer according to Claim 1 or 2, **characterized in that** P is greater than 6.9, more preferably greater than or equal to 9.6.

**4.** Method for the continuous synthesis of a modified diene elastomer according to any one of Claims 1 to 3, **characterized in that** the functionalizing agent is represented by formula 1:

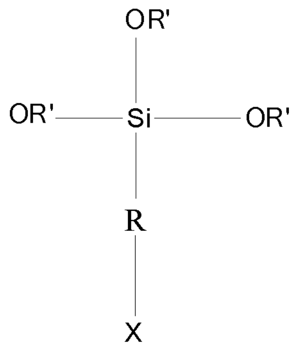

Formula 1

in which,

- R is a $C_1$-$C_{18}$ cyclic or non-cyclic, saturated or unsaturated, aliphatic or $C_6$-$C_{18}$ aromatic divalent hydrocarbon radical, preferably a $C_1$-$C_{10}$ aliphatic, linear or branched, divalent hydrocarbon radical, more preferably a $C_1$-$C_6$ aliphatic, linear, divalent hydrocarbon radical, more preferably still the $C_3$ linear hydrocarbon radical,

- X is a hydrogen atom or a function capable of interacting with a reinforcing filler,
- the R' radicals, which are substituted or unsubstituted, identical or different, represent a $C_1$-$C_{10}$, or even $C_1$-$C_8$, alkyl group, preferably a $C_1$-$C_4$ alkyl group, more preferably methyl and ethyl.

**5.** Method for the continuous synthesis of a modified diene elastomer according to Claim 4, **characterized in that** X is a function capable of interacting with a reinforcing filler selected from cyclic or non-cyclic, primary, secondary or tertiary amines, isocyanates, imines, cyano compounds, thiols, carboxylates, epoxides and primary, secondary or tertiary phosphines.

**6.** Method for the continuous synthesis of a modified diene elastomer according to Claim 5, **characterized in that** the function capable of interacting with a reinforcing filler is a secondary amine optionally protected by a trialkylsilyl group or a tertiary amine, the nitrogen atom being substituted by $C_1$-$C_{10}$ alkyl radicals, preferably $C_1$-$C_4$ alkyl radicals, more preferably a methyl or ethyl radical, or else a cyclic amine that forms a heterocycle containing a nitrogen atom and at least one carbon atom, preferably 2 to 6 carbon atoms.

**7.** Method for the continuous synthesis of a modified diene elastomer according to Claim 6, **characterized in that** the functionalizing agent is selected from 3-(N,N-dimethylaminopropyl)trimethoxysilane, 3-(N,N-dimethylaminopropyl)triethoxysilane, 3-(N,N-diethylaminopropyl)trimethoxysilane, 3-(N,N-diethylaminopropyl)-triethoxysilane, 3-(N,N-dipropylaminopropyl)trimethoxysilane, 3-(N,N-dipropyl-aminopropyl)triethoxysilane, 3-(N,N-dibutylaminopropyl)trimethoxysilane, 3-(N,N-dibutylaminopropyl)triethoxysilane, 3-(N,N-dipentylaminopropyl)trimethoxysilane, 3-(N,N-dipentylaminopropyl)triethoxysilane, 3-(N,N-dihexylaminopropyl)trimethoxysilane, 3-(N,N-dihexylaminopropyl)triethoxysilane, 3-(hexamethyleneaminopropyl)trimethoxysilane and 3-(hexamethyleneaminopropyl)triethoxysilane.

**8.** Method for the continuous synthesis of a modified diene elastomer according to any one of Claims 1 to 6, **characterized in that** it comprises, subsequent to the modification step, a step of deprotection when the function capable of interacting with the reinforcing filler is a protected primary or secondary amine, protected thiol or protected primary or secondary phosphine function.

**9.** Method for the continuous synthesis of a modified diene elastomer according to any one of the preceding claims, **characterized in that** it comprises, subsequent to the modification step, a step of hydrolysis of the modified elastomer obtained in the preceding step.

**10.** Method for the continuous synthesis of a modified diene elastomer according to any one of the preceding claims, **characterized in that** the molar ratio of the functionalizing agent to the polymerization initiator has a value ranging from 0.40 to 0.75.

**11.** Method for the continuous synthesis of a modified diene elastomer according to any one of Claims 1 to 9, **characterized in that** the molar ratio of the functionalizing agent to the polymerization initiator has a value ranging from 0.15 to 0.40.

**12.** Method for the continuous synthesis of a modified diene elastomer according to any one of Claims 1 to 9, **characterized in that** the molar ratio of the functionalizing agent to the polymerization initiator has a value greater than or equal to 0.75.

**13.** Modified diene elastomer, **characterized in that** it is obtained according to the continuous synthesis method as described in any one of the preceding claims.

**14.** System for the continuous synthesis of a modified diene elastomer, **characterized in that** it comprises

- a polymerization device consisting of at least one polymerization reactor equipped with a device for continuously supplying monomers and an anionic polymerization initiator, as well as an outlet for discharging the living diene elastomer
- a device for modifying the living diene elastomer resulting from the anionic polymerization step, equipped with a device for continuously supplying living elastomer from the polymerization reactor and equipped with a device for continuously supplying a functionalizing agent, modelled on one of the following models:

  1. a tubular reactor with axial dispersion,

2. a tubular reactor with axial dispersion, in series with at least one continuous stirred reactor, presumed to be perfectly stirred,
3. at least one tubular reactor with axial dispersion, in series with a continuous stirred reactor, presumed to be perfectly stirred,
4. several tubular reactors with axial dispersion, in series with several continuous stirred reactors, presumed to be perfectly stirred,
5. at least two continuous stirred reactors, presumed to be perfectly stirred, in series.

**15.** Use of a system according to Claim 14 for the implementation of the method according to Claims 1 to 12.

**16.** Unit for the continuous preparation of a modified diene elastomer, **characterized in that** it incorporates the system according to Claim 14 and **in that** the modifying device is in contact downstream with a device for recovering the diene elastomer.

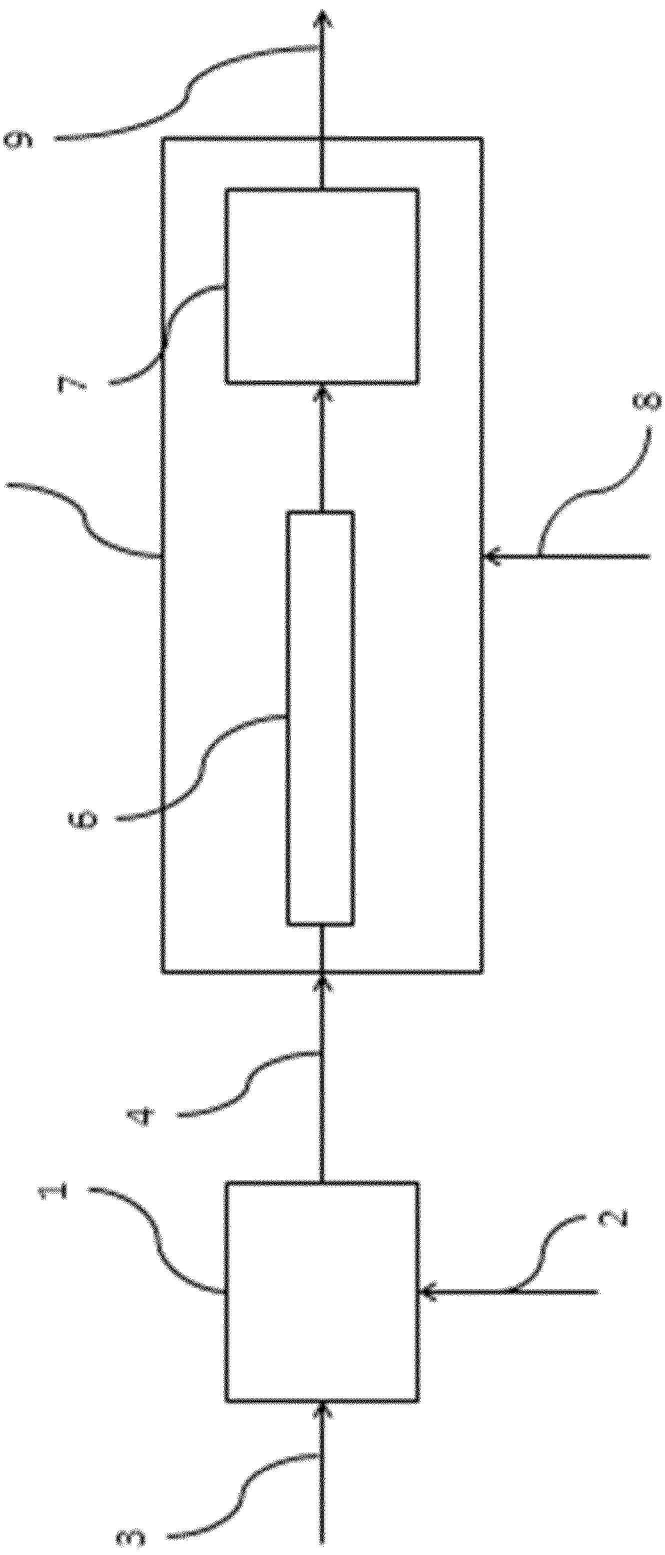


**Fig. 1**

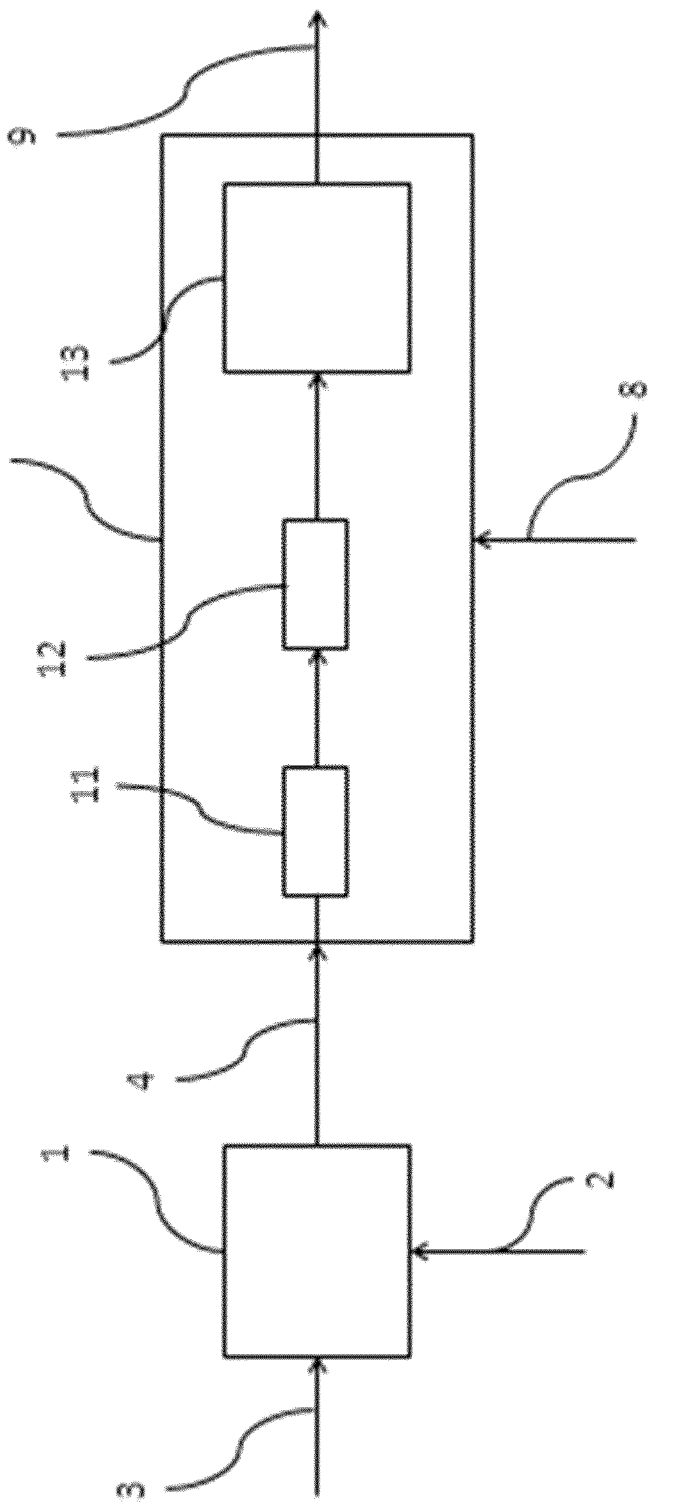


**Fig. 2**

# Fig. 3

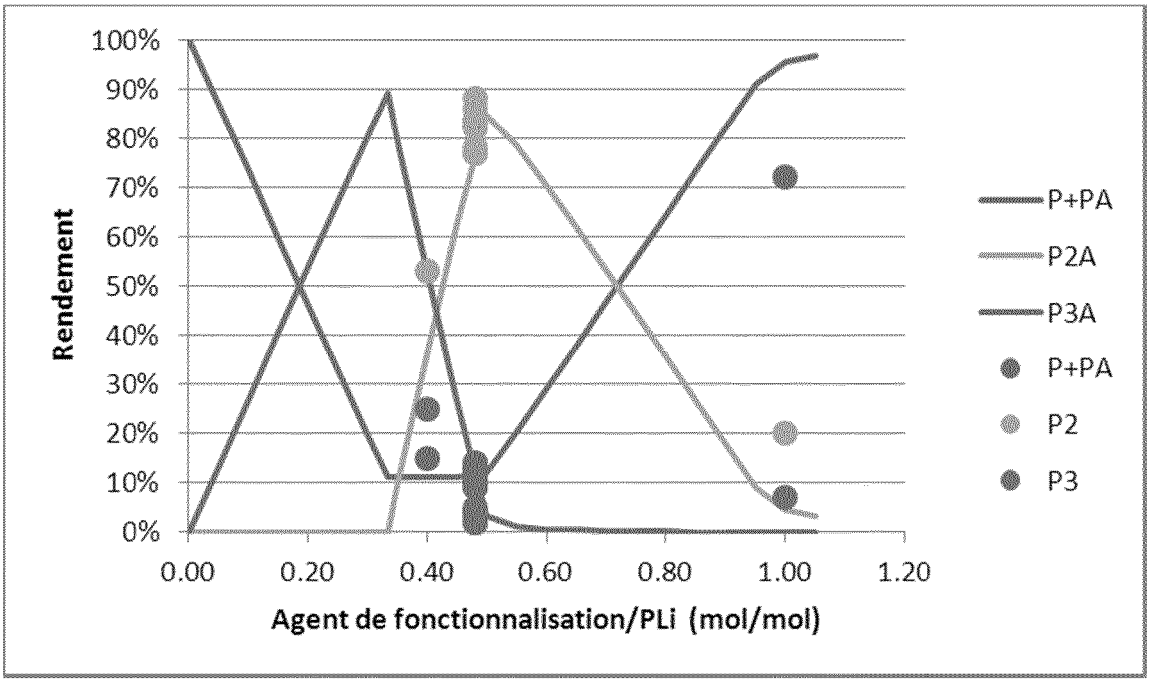
100%
90%
80%
70%
60%
50%
40%
30%
20%
10%
0%
Rendement
0.00
0.20
0.40
0.60
0.80
1.00
1.20
Agent de fonctionnalisation/PLi (mol/mol)
P+PA
P2A
P3A
P+PA
P2
P3

# Fig. 4

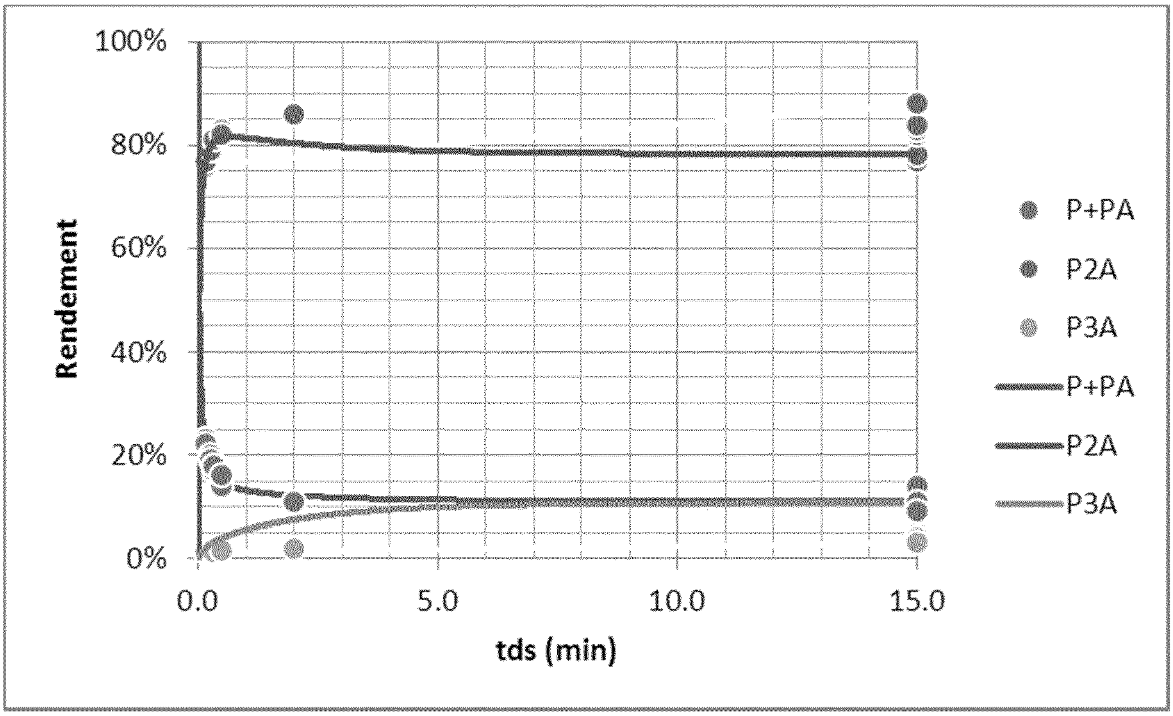
100%
80%
60%
40%
20%
0%
Rendement
0.0
5.0
10.0
15.0
tds (min)
P+PA
P2A
P3A
P+PA
P2A
P3A

# Fig. 5

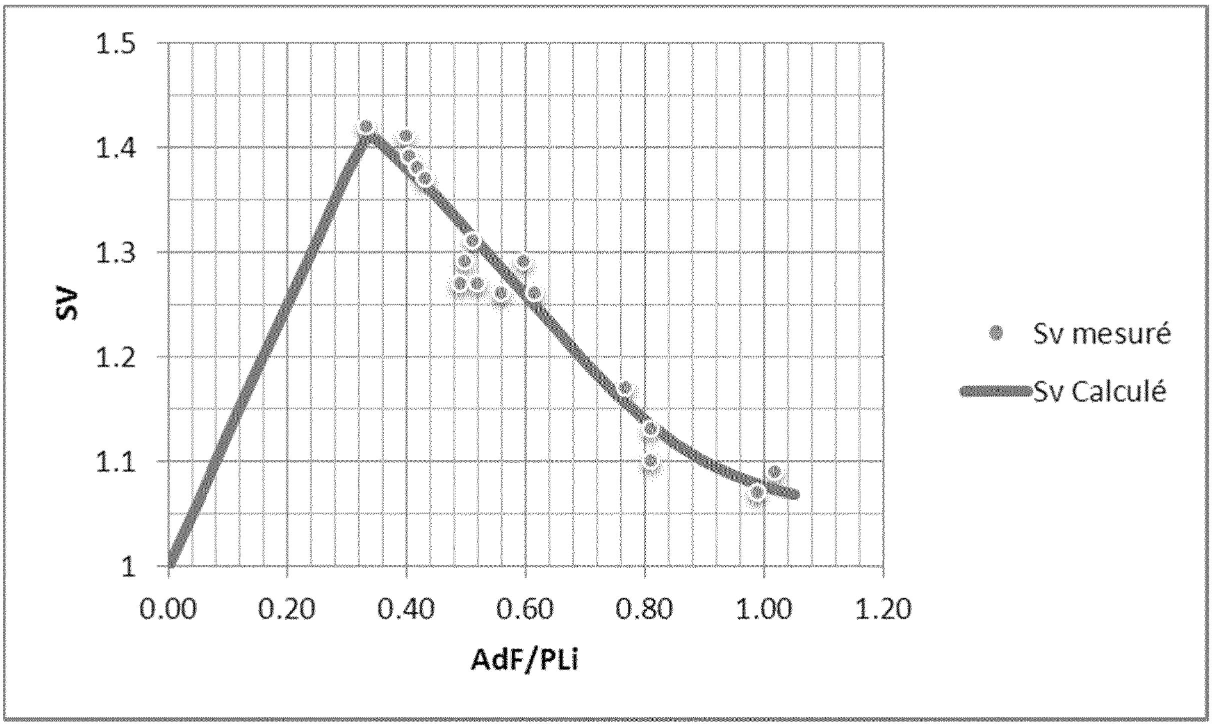
SV
1.5
1.4
1.3
1.2
1.1
1
0.00
0.20
0.40
0.60
0.80
1.00
1.20
AdF/PLi
Sv mesuré
Sv Calculé

# Fig. 6

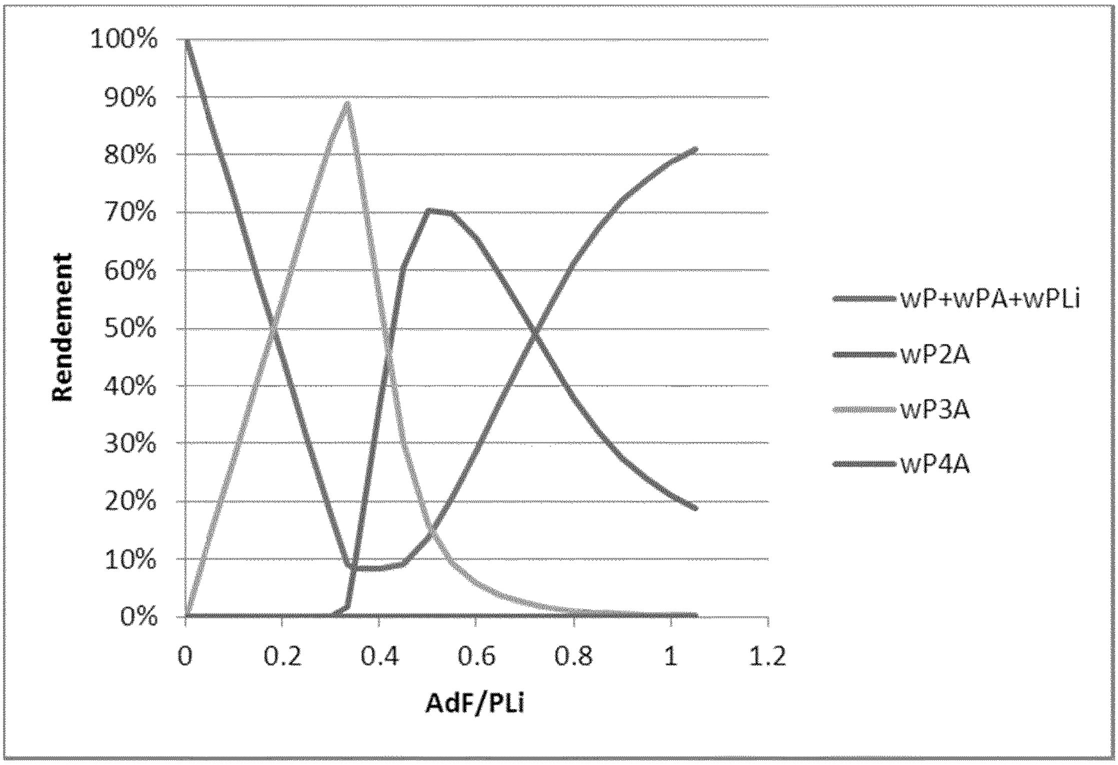
Rendement
100%
90%
80%
70%
60%
50%
40%
30%
20%
10%
0%
0
0.2
0.4
0.6
0.8
1
1.2
AdF/PLi
wP+wPA+wPLi
wP2A
wP3A
wP4A

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5066721 A
- WO 2009077837 A
- EP 0299074 A
- EP 0992537 A
- US 20050203251 A
- WO 2009133068 A1
- US 7807747 B2
- EP 2266819 A1


### Littérature non-brevet citée dans la description


- **VILLERMEAUX, J.** *Génie de la réaction chimique,* 1993
- **T. W. GREEN ; P. G. M. WUTS.** Protective Groups in Organic Synthesis. 1999
- **VILMIN, F. ; DUSSAP, C. ; COSTE, N.** *Applied Spectroscopy,* 2006, vol. 60, 619-29